(19)

Europäisches
Patentamt
European
Patent Office
Office européen
des brevets

(11) **EP 3 109 803 B1**

(12) **EUROPEAN PATENT SPECIFICATION**

(45) Date of publication and mention
of the grant of the patent:
**29.07.2020 Bulletin 2020/31**

(51) Int Cl.:
***G06N 99/00*** (2019.01)

(21) Application number: **16175834.7**

(22) Date of filing: **22.06.2016**

(54) **STRUCTURE AND METHOD FOR PROCESSING QUANTUM INFORMATION**

STRUKTUR UND VERFAHREN ZUR VERARBEITUNG VON QUANTENINFORMATIONEN

STRUCTURE ET MÉTHODE POUR LE TRAITEMENT D'INFORMATION QUANTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2015 IT UB20151571**

(43) Date of publication of application:
**28.12.2016 Bulletin 2016/52**

(73) Proprietor: **Leonardo S.p.A.**
**00195 Roma (IT)**

(72) Inventor: **BOVINO, Fabio Antonio**
**00195 Roma (IT)**

(74) Representative: **Spalla, Pietro et al**
**Studio Torta S.p.A.**
**Via Viotti, 9**
**10121 Torino (IT)**

(56) References cited:

- **SHAMSOLAH SALEMIAN ET AL: "Quantum state swapping in optical quantum communication using Mach-Zehnder interferometer", TELECOMMUNICATIONS, 2008. IST 2008. INTERNATIONAL SYMPOSIUM ON, IEEE, PISCATAWAY, NJ, USA, 27 August 2008 (2008-08-27), pages 182-187, XP031348825, ISBN: 978-1-4244-2750-5**
- **O'BRIEN J L ET AL: "Demonstration of an all-optical quantum controlled-NOT gate", ARXIV.ORG, CORNELL UNIVERSITY LIBRARY, 201 OLIN LIBRARY CORNELL UNIVERSITY ITHACA, NY 14853, 8 March 2004 (2004-03-08), XP080147837, DOI: 10.1038/NATUR=**
- **Shamsolah Salemian ET AL: "Quantum Entanglement Implementation Using Interferometric Electro-Optic Modulator and Coupled Mode Theory", Journal of Applied Sciences, 31 December 2008 (2008-12-31), XP055250329, Retrieved from the Internet: URL:http://docsdrive.com/pdfs/ansinet/jas/2008/743-752.pdf [retrieved on 2016-02-16]**
- **WEI-BO GAO ET AL: "Teleportation-based realization of an optical quantum two-qubit entangling gate", ARXIV.ORG, CORNELL UNIVERSITY LIBRARY, 201 OLIN LIBRARY CORNELL UNIVERSITY ITHACA, NY 14853, 3 November 2010 (2010-11-03), XP080460257,**

EP 3 109 803 B1

**Description**

The present invention relates to a structure and a method for processing quantum information.

As is known, so-called quantum computers allow processing fundamental units of information known as quantum bits, or more briefly, as qubits. Unlike traditional bits, each if which can alternatively take the value '0' or '1', each qubit can represent, at the same time, both value '0' and value '1', in a so-called quantum superposition. In practice, each qubit is associated with a corresponding intrinsically quantum state, which can be prepared by using, for example, the electronic states of an atom, or the polarization states of a single photon, or again, always purely by way of example, the electrodynamic states of a superconductor circuit.

Groups of qubits can be organized inside a register, which can simultaneously represent many numbers in quantum superposition. A quantum computer is designed to make an initial superposition of coded numbers evolve into a different final superposition. During this evolution, each number of the initial superposition becomes involved in a way such that a quantum computer implements a parallel computation mechanism.

In a similar manner to what happens in the classical environment, a quantum computer can be formed starting from a plurality of computation units, such as the so-called logic gates for example. As is known, reversible logic gates are typically used (for example, the NOT logic gate), i.e. logic gates such that for each input value, there exists a single corresponding output value, and vice versa; in this way, in use, a reversible logic gate does not cause any cancellation of information. Furthermore, universal reversible gates are preferably used, i.e. gates that enable implementing any logic function; examples of universal reversible gates are given by the Toffoli gate and by the Fredkin gate (also known as a controlled-swap gate).

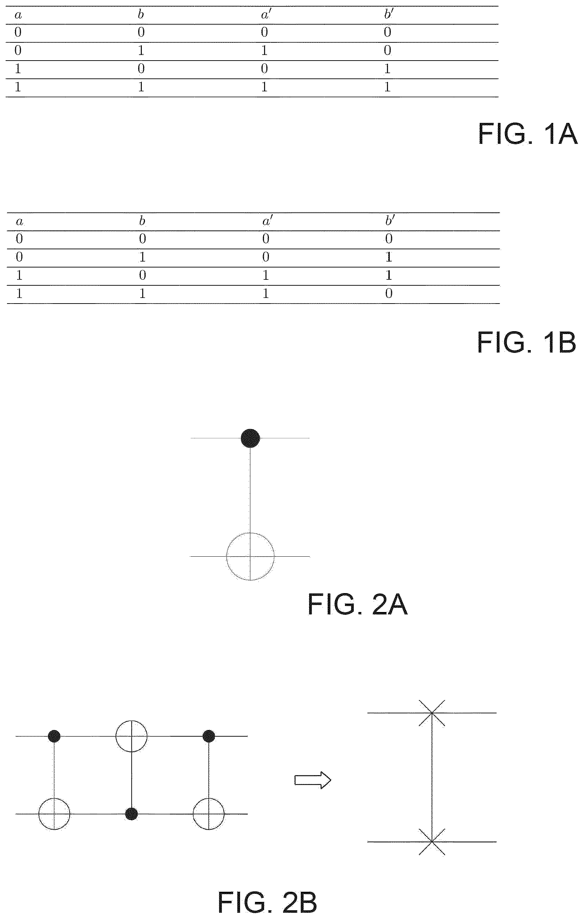

Examples of truth tables for two reversible logic gates are shown in Figures 1a and 1b, where the inputs are indicated as a and b, while the outputs are indicated as *a'* and *b'*. In particular, Figure 1a shows the truth table of the so-called SWAP gate, which swaps the values in input; whereas Figure 1b shows the truth table of the so-called CNOT gate, which inverts the value of the bit on the second input, if and only if the bit on the first input is equal to '1'. In connection with this, Figure 2a shows a symbolic representation of the CNOT gate, while Figure 2b shows a symbolic representation of the SWAP gate, together with a symbolic diagram that shows how the SWAP gate can be obtained by placing three CNOT gates in cascade.

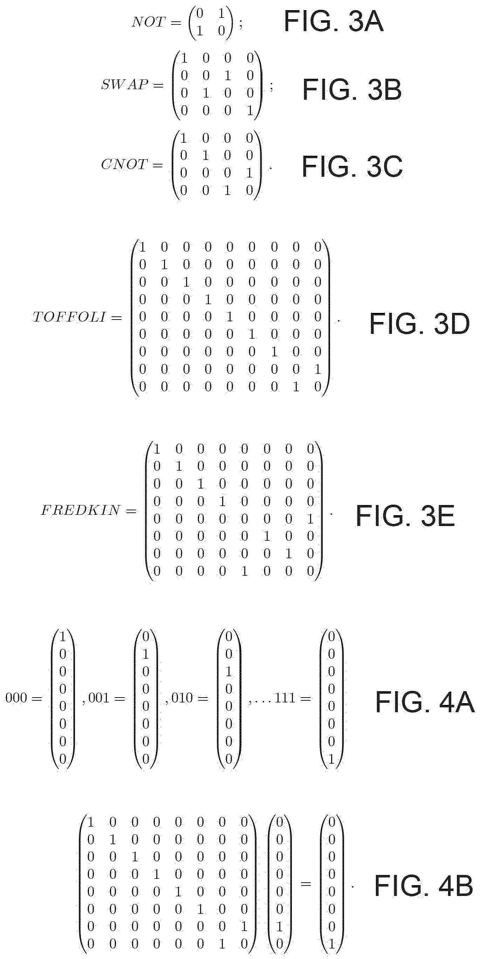

Matrix representations of the NOT, SWAP, CNOT, TOFFOLI and FREDKIN gates are shown in Figures 3a, 3b, 3c, 3d and 3e, respectively. In particular, Figures 3a-3e show matrices where, assuming row and column indices i, j, the $(i,j)^{th}$ element is equal to '1' if and only if the input string that corresponds to the $i^{th}$ row is mapped on the output string that corresponds to the $j^{th}$ column. In practice, these matrices are permutation matrices, as they contain a single '1' in each row and in each column. Therefore, to calculate the effect of a reversible logic gate on a string of input bits, it is possible to prepare a corresponding column vector, as shown in Figure 4a for example, and then multiply the prepared vector by the permutation matrix related to the logic gate considered, as shown in Figure 4b for example, with reference to the TOFFOLI gate.

That having been said, so-called KLM architectures are also known, namely quantum architectures based on linear optical elements, where measurement of the quantum states is performed by placing photon detectors along the different optical paths. KLM architectures prepare quantum states on the basis of photons, benefiting, among other things, from the high mobility of photons and long decoherence times. However, this type of architecture is characterized by poor scalability, as well as not entirely satisfactory error rates.

In greater detail, a quantum computer based on a KLM structure requires the capability to generate N (where N>1) mutually coherent single-photon states, i.e. it requires the capability to generate a perfect N-photon state; in addition, this computer calls for the use of at least N single-photon detectors, which, in turn, are characterized by low quantum efficiency. Apart from this, it is possible to demonstrate that the logic gates based on KLM structures have a probabilistic behaviour, in the sense that they have probabilities of less than one of performing the desired operations. For example, there are known quantum CNOT gates, which operate on two qubits and transform the basis states in a way such that the second qubit is negated, if and only if the first qubit is in state |1>; unfortunately, the probability of success of these quantum logic gates is only 1/9.

Documents relating to quantum computing are the following ones: Shamsolah Salemian et al., "Quantum state swapping in optical quantum communication using Mach-Zehnder interferometer", IEEE INTERNATIONAL SYMPOSIUM ON TELECOMMUNICATIONS, 27 August 2008, pages 182-187; O'Brien J. L. et al., "Demonstration of an all-optical quantum controlled NOT gate", CORNELL UNIVERSITY LIBRARY, 201 Olin Library Cornell University Ithaca, NY 14853, 8 March 2004; Shamsolah Salemian et al., "Quantum entanglement implementation using interferometric electro-optic modulator and coupled mode theory", JOURNAL OF APPLIED SCIENCES, 31 December 2008.

In addition, an implementation of teleportation is disclosed in Wei-Bo Gao et al., "Teleportation-based realization of an optical quantum two-qubit entangling gate", CORNELL UNIVERSITY LIBRARY, 201 Olin Library Cornell University Ithaca, NY 14853, 3 November 2010.

The object of the present invention is therefore to provide a quantum processing structure that at least partially overcomes the limitations of the known art.

According to the present invention, a quantum processing structure is provided as defined in the appended claims.

For a better understanding of the invention, some embodiments will now be described, purely by way of a non-limitative example and with reference to the accompanying drawings, in which:

- Figures 1a and 1b show truth tables of known types of logic gates;
- Figures 2a and 2b show graphical symbols related to the logic gates referred to in Figures 1a and 1b, respectively;
- Figures 3a-3e show permutation matrices related to known types of logic gates;
- Figure 4a shows examples of associations between bit strings and corresponding column vectors;
- Figure 4b shows a mathematical example of how a logic gate modifies a column vector in input;
- Figures 5-8 and 10 schematically show optical structures that implement corresponding quantum logic functions;
- Figures 9 and 11 show mathematical relationships related to the optical structures shown in Figures 8 and 10, respectively;
- Figures 12 and 15 show logic circuits related to an entanglement generator;
- Figures 13 and 16 show optical diagrams of embodiments of an entanglement generator;
- Figure 14 shows a logic circuit related to the entanglement generator shown in Figure 13, when used to carry out a Bell measurement;
- Figure 17 shows a block diagram of a system for implementing quantum teleportation;
- Figure 18 shows a block diagram of a quantum processing system;
- Figure 20 shows a block diagram of a teleportation structure; and

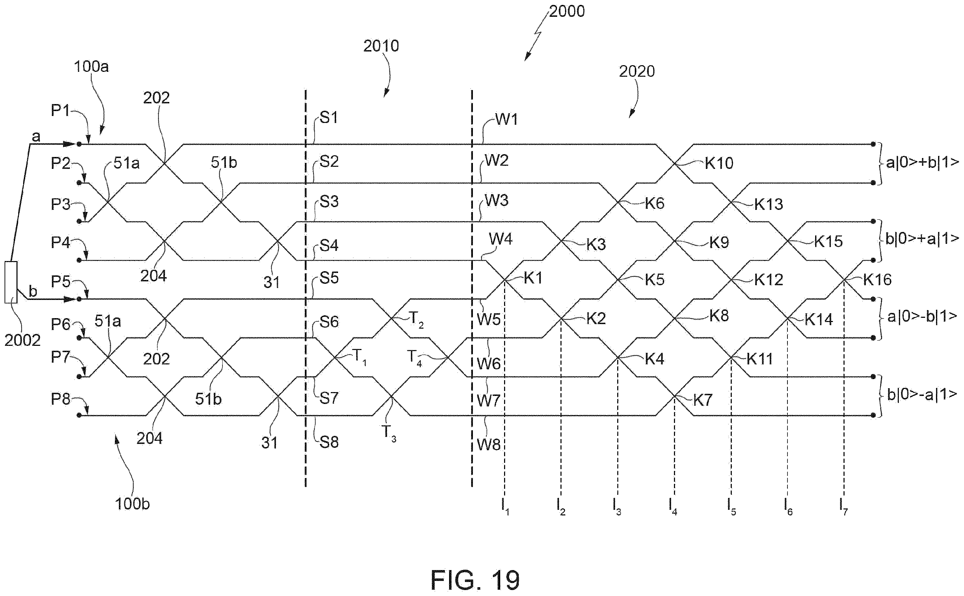

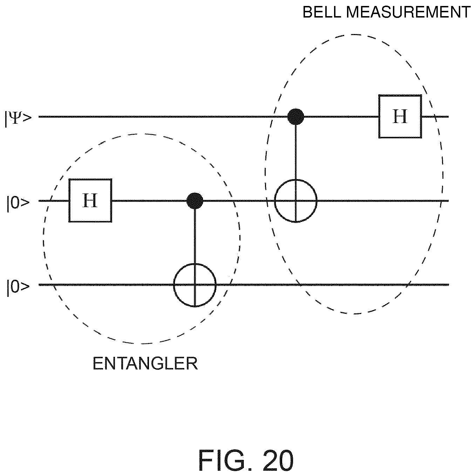

- Figure 19 shows a block diagram of the operations performed by the teleportation structure shown in Figure 20.

As will be explained in the following, the present structure is inspired by the idea of encoding an entire state space (formed by the superposition of two or more states) by optically coupling a single photon, or a coherent state with an arbitrary average number of photons $\mu$, to an optical circuit.

In detail, in the embodiments described hereinafter, the physical carrier is provided by a single photon, or by a coherent state with an arbitrary average number of photons $\mu$; however, embodiments are possible in which the state space is encoded by coupling coherent electromagnetic fields to structures for electromagnetic propagation. For simplicity of description, reference will be made hereinafter to a single photon, instead of a coherent state with an arbitrary average number of photons $\mu$, except where specified otherwise.

In greater detail, in the embodiments described hereinafter, a given state is encoded in the quantum superposition of a single photon through the use of optical paths, for example, of the guided type.

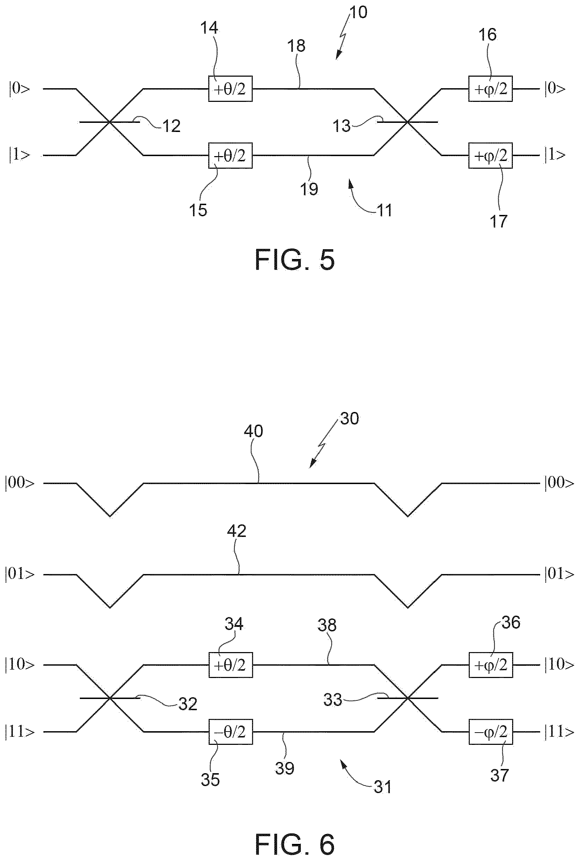

That having been said, Figure 5 shows a first logic gate 10, of the NOT type, which will hereinafter be referred to as the NOT gate 10.

The NOT gate 10 is a single-qubit reversible gate. Furthermore, the NOT gate 10 comprises an interferometer 11, for example, of the Mach-Zehnder type.

In detail, the interferometer 11 comprises a first and a second optical beam splitter 12 and 13 (schematically shown), of a type in itself known; in particular, the first and the second optical beam splitter 12 and 13 are so-called 50/50 optical beam splitters. Furthermore, the interferometer 11 comprises a first, a second, a third and a fourth phase shifter 14, 15, 16 and 17.

The first and second gates of the first optical beam splitter 12 respectively form a first and a second input of the NOT gate 10, while the third and fourth gates of the first optical beam splitter 12 are connected to the inputs of the first and the second phase shifter 14 and 15, respectively, the outputs of which are respectively connected to the first and second gates of the second optical beam splitter 13. The third and fourth gates of the second optical beam splitter 13 are connected to the inputs of the third and the fourth phase shifter 16 and 17, respectively, the outputs of which respectively form a first and a second output of the NOT gate 10.

The interferometer 11 defines a first and a second arm 18 and 19. The first arm 18 connects the first output of the interferometer 11 to the first input of the interferometer 11, while the second arm 19 connects the second output of the interferometer 11 to the second input of the interferometer 11.

In greater detail, the first arm 18 passes through the first and the third gate of the first optical beam splitter 12, as well as the first and the third gate of the second optical beam splitter 13; the second optical arm 19 passes through the second and the fourth gate of the first optical beam splitter 12, as well as the second and the fourth gate of the second optical beam splitter 13. Thus, the first and the third phase shifter 14 and 16 extend along the first arm 18, while the second and the fourth phase shifter 15 and 17 extend along the second arm 19.

In even greater detail, and without any loss of generality, the first and second arms 18 and 19 form optical paths of a guided type.

In use, the NOT gate 10 can be optically coupled to an optical source. In particular, the situation where a single photon is injected in the first input of the interferometer 11, i.e. in the first arm 18, represents state |0>. Then, the interferometer 11 operates in such a way that the photon exits from the second output of the interferometer 11, i.e. on the second arm 19, so as to represent state |1>. To that end, the first and second phase shifters 14 and 15, of a type in itself known, introduce phase shifts of $\theta/2$ and $-\theta/2$, respectively, while the third and fourth phase shifters 16 and 17 introduce phase shifts of $\varphi/2$ and $-\varphi/2$, respectively, where $\theta=\pi$ and $\varphi=\pi/2$.

Vice versa, the situation in which the photon is injected in the second input of the interferometer 11, i.e. in the second arm 19, represents state |1>. Then, the interferometer 11 operates in such a way that the photon exits from the first output of the interferometer 11, i.e. on the first arm 18, so as to represent state |0>; to that end, the relations $\theta=\pi$ and $\varphi=\pi/2$ remain valid.

In greater detail, in addition to being coupled together, the first and second arms 18 and 19 have the same optical length, which, as is known, depends on the geometrical length and the index of refraction of the arm, with the exception of phase shifts introduced by the respective phase shifters; in other words, if the relation $\theta=\varphi=0$ is true, the first and second arms 18 and 19 would have exactly the same optical length. Furthermore, $\theta<2\pi$ holds, namely it is found that the first and second phase shifters 14 and 15 cause a difference in optical length between the first and second arms 18 and 19 that is less than $\lambda$, where $\lambda$ indicates the wavelength of the photon, when propagating in the first or in the second arm 18 and 19; similarly, $\varphi<2\pi$ holds, and so, altogether, the first and second arms 18 and 19 have optical lengths differing from each other by less than $2*\lambda$. In this way, it is ensured that photons can interfere in the first and second optical beam splitters 12 and 13.

The NOT gate 10 is therefore equivalent to the so-called Pauli operator X or $\sigma_x$. In the case where the input state is a generic superposition $\alpha|0>+\beta|1>$, where $\alpha$ and $\beta$ are complexes and such that $|\alpha|^2+|\beta|^2=1$, the output state will be $\alpha|1>+\beta|0>$.

Figure 6 shows a further logic gate 30, of the CNOT type, which will be referred to as the CNOT gate 30.

The CNOT gate 30 includes the interferometer, indicated here by reference numeral 31. With regard to this, the first and second optical beam splitters, the first, second, third and fourth phase shifters, and the first and second arms are indicated here by reference numerals 32, 33, 34, 35, 36, 37, 38 and 39, respectively.

The CNOT gate 30 further comprises a first and a second waveguide 40 and 42 that respectively form a first and a second optical path, which are optically decoupled from each other and are also decoupled from the interferometer 31.

In practice, the first and second arms 38 and 39 of the interferometer 31 form a third and a fourth optical path of the CNOT gate 30. Furthermore, the first and second waveguides 40 and 42 are the same as each other and such that each of the first and second optical paths has an optical length equal to half the optical length of the first arm 38 of the interferometer 31, with the exception of the phase shifts introduced by the first and third phase shifters 34 and 36; similarly, each of the first and second optical paths has an optical length equal to the optical length of the second arm 39 of the interferometer 31, with the exception of the phase shifts introduced by the second and fourth phase shifters 35 and 37. In other words, if the relation $\theta=\varphi=0$ holds, the first and second optical paths would have the same optical length of the first and second arms 38 and 39 of the interferometer 31.

Without any loss of generality, the second waveguide 42 is interposed between the first waveguide 40 and the interferometer 31. In practice, the input and the output of the first waveguide 40 respectively form the first input and the first output of the CNOT gate 30; furthermore, the input and the output of the second waveguide 42 respectively form the second input and the second output of the CNOT gate 30. In turn, the first and second inputs of the interferometer 31 respectively form a third and a fourth input of the CNOT gate 30, while the first and second outputs of the interferometer 31 respectively form a third and a fourth output of the CNOT gate 30.

In use, the situation in which a photon is injected in the first waveguide 40, i.e. in the first input of the CNOT gate 30, represents state |00>. Alternatively, if the photon is injected in the second waveguide 42, state |01> is represented. Lastly, if the photon is injected in the first arm 38 or in the second arm 39 of the interferometer 31, state |10> or state |11> is respectively represented.

When one of the states |00> and |01> is generated, it remains unchanged. Otherwise, if state |10> is generated, i.e. if the photon is injected in the third input of the CNOT gate 30, the photon is deviated to the fourth output of the CNOT gate 30, and state |11> is therefore generated. While, if state |11> is generated, i.e. if the photon is injected in the fourth input of the CNOT gate 30, the photon is deviated to the third output of the CNOT gate 30, and state |10> is therefore generated.

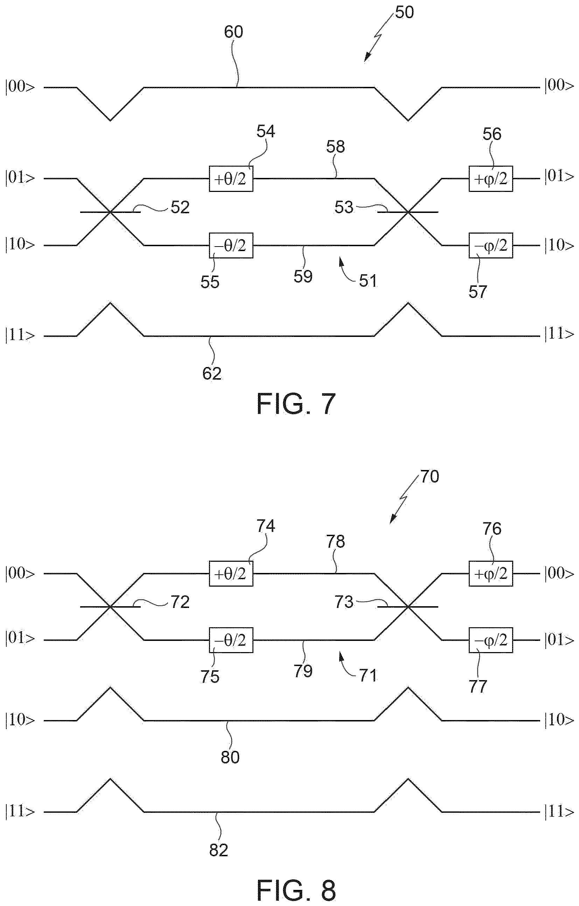

Figure 7 shows a further logic gate 50, of the SWAP type, which will be referred to as the SWAP gate 50.

The SWAP gate 50 still comprises the interferometer, indicated here by reference numeral 51, and the first and second waveguides, indicated here by reference numerals 60 and 62, respectively. With regard to this, the first and second optical beam splitters, the first, second, third and the fourth phase shifters, and the first and second arms are indicated here by reference numerals 52, 53, 54, 55, 56, 57, 58 and 59, respectively.

Without any loss of generality, the interferometer 51 is interposed between the first and second waveguides 60 and 62. Thus, the first and second waveguides 60 and 62 respectively form the first and the fourth optical path of the SWAP gate 50, while the first and second arms 58 and 59 of the interferometer 51 respectively form the second and the third optical path of the SWAP gate 50.

In greater detail, the input and output of the first waveguide 60 respectively form the first input and the first output of the SWAP gate 50; furthermore, the input and output of the second waveguide 62 respectively form the fourth input and the fourth output of the SWAP gate 50. The first and second inputs of the interferometer 51 respectively form the second and the third input of the SWAP gate 50, while the first and second outputs of the interferometer 51 respectively form the second and the third output of the SWAP gate 50.

In use, states |00> and |11> correspond to the cases where the photon is injected in the first and in the second waveguide 60 and 62, respectively, i.e. in the first and in the fourth input of the SWAP gate 50; in these cases, the output state is the same as the input state. In addition, states |01> and |10> respectively correspond to the cases where the photon is injected in the second and in the third input of the SWAP gate 50; in these cases, if the input state is equal to |01>, the output state is equal to |10>, and vice versa.

In practice, apart from the arrangements of the interferometer and of the first and second waveguides, the SWAP gate 50 and the CNOT gate 30 differ from each other in how the input states are mapped (i.e. associated) to corresponding inputs of the logic gate considered, and therefore to corresponding optical paths.

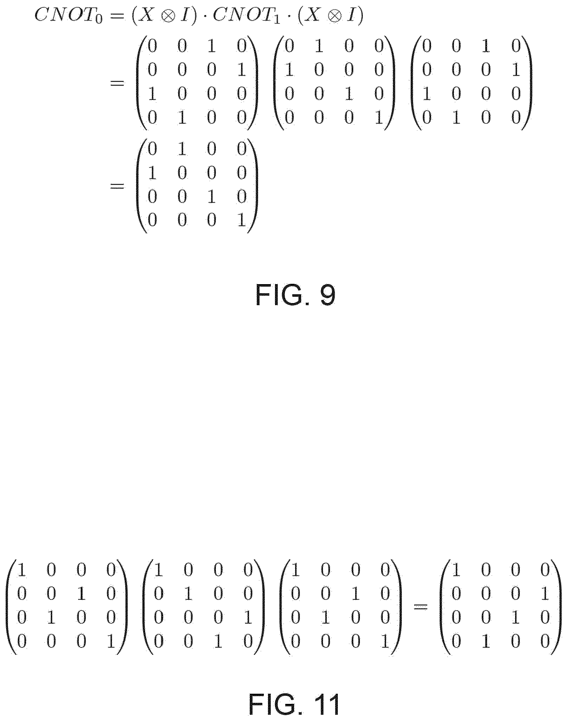

Based on the previously described gates, it is possible to implement further logic gates. For example, Figure 8 shows a CNOT logic gate 70 with control based on the value |0> (hereinafter $\mathrm{CNOT}_0$), for which the relations shown in Figure 9 hold. For reasons of clarity, in Figure 8, the interferometer, the first and second optical beams splitter, the first, second, third and fourth phase shifters, the first and second arms, and the first and second waveguides are indicated by reference numerals 71, 72, 73, 74, 75, 76, 77, 78, 79, 80 and 82, respectively.

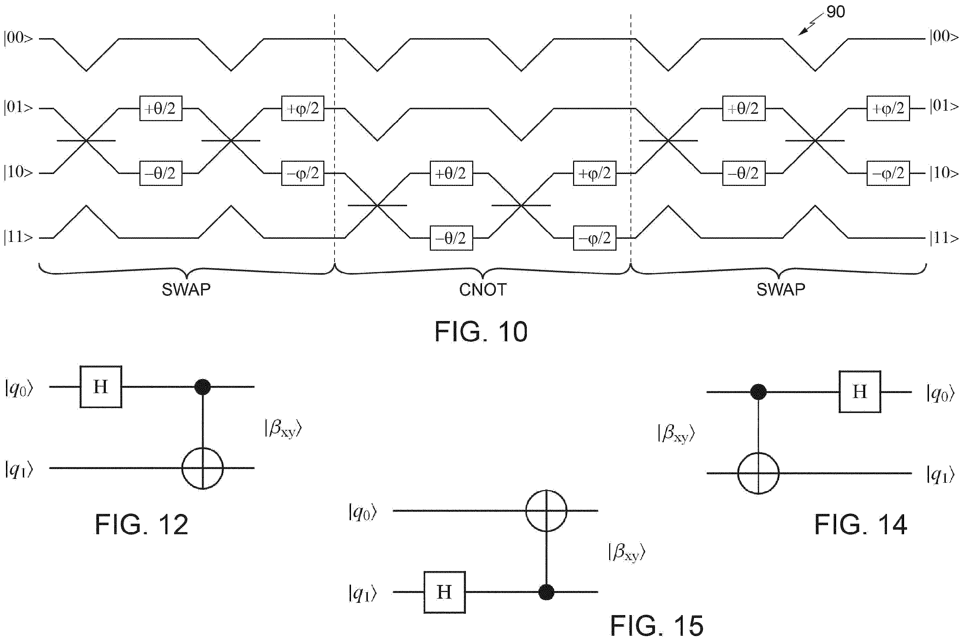

Figure 10, instead, shows a logic gate 90, which has the control qubit and target qubit inverted with respect to the CNOT gate 30; the relations shown in Figure 11 hold for logic gate 90, from which it can be deduced that the logic gate 90 can be obtained as a cascade of a first SWAP gate, a CNOT gate and a second SWAP gate.

An example of how the present optical structure enables implementing an entanglement generator, as well as carrying out the so-called Bell measurements, which enable projecting two qubits in the so-called Bell basis, are described below. With regard to this, it is possible to demonstrate that when adopting so-called "dual rail" encoding, it is not possible to carry out deterministic Bell measurements by resorting only to linear optical elements. Conversely, as explained below, the present structure, of a multi-rail type, allows discriminating all four of the Bell states in a deterministic manner.

In detail, it is known that the so-called "tangle" provides a measurement of the degree of entanglement inside a quantum state. Formally, the tangle is given by the square of the so-called "concurrence", which, for a pure two-qubit state $|\psi\rangle$, is given by:

$$\mathrm{Conc}\left(|\psi\rangle\right) = \left|\left\langle \psi \mid \tilde{\psi} \right\rangle\right|$$

where $|\tilde{\psi}\rangle$ is the spin-flipped version of $|\psi\rangle$, namely:

$$\left|\tilde{\psi}\right\rangle = \left(Y \otimes Y\right)\left|\psi^{*}\right\rangle$$

where Y is the Pauli matrix Y and $|\psi^*\rangle$ is equal to $|\psi\rangle$, but has an amplitude equal to the complex conjugate of the amplitude of $|\psi\rangle$; therefore,
if $|\psi\rangle = a|00\rangle + b|01\rangle + c|10\rangle + d|11\rangle$,
then $|\psi^*\rangle = a^*|00\rangle + b^*|01\rangle + c^*|10\rangle + d^*|11\rangle$, which gives:

$$\mathrm{Conc}\left(|\psi\rangle\right) = \left|2b^*c^* - 2a^*d^*\right|$$

The spin-flip transformation maps each state in the corresponding orthogonal state, so this transformation is not unitary and cannot be performed in a deterministic manner by any isolated quantum system. Furthermore, one of the properties of the spin-flip transformation is given by the fact that, if a two-qubit state $|\psi\rangle$ is a product state (i.e. a non-entangled state), the inverse spin version $|\tilde{\psi}\rangle$ is orthogonal to state $|\psi\rangle$. Therefore, the overlap is null and the concurrence of state $|\psi\rangle$ is null. Conversely, maximally entangled states, such as the Bell states for example, remain invariant, but for a common external phase. With regard to this, the Bell states are given by:

$$\left|\beta_{00}\right\rangle = \frac{1}{\sqrt{2}}\left(|00\rangle + |11\rangle\right)$$

$$\left|\beta_{01}\right\rangle = \frac{1}{\sqrt{2}}\big(\left|01\right\rangle+\left|10\right\rangle\big)$$

$$\left|\beta_{10}\right\rangle = \frac{1}{\sqrt{2}}\big(\left|00\right\rangle-\left|11\right\rangle\big)$$

$$\left|\beta_{11}\right\rangle = \frac{1}{\sqrt{2}}\big(\left|01\right\rangle-\left|10\right\rangle\big)$$

Spin inversion results in:

$$\left|\beta_{00}\right\rangle \Rightarrow -\left|\beta_{00}\right\rangle$$

$$\left|\beta_{01}\right\rangle \Rightarrow \left|\beta_{01}\right\rangle$$

$$\left|\beta_{10}\right\rangle \Rightarrow \left|\beta_{10}\right\rangle$$

$$\left|\beta_{11}\right\rangle \Rightarrow -\left|\beta_{11}\right\rangle$$

In other words, the overlap between a maximally entangled state and its counterpart with inverse spin is unitary, so the concurrence of a maximally entangled state is equal to one. For these reasons, the tangle provides a measurement of the degree of entanglement of a pure two-qubit state.

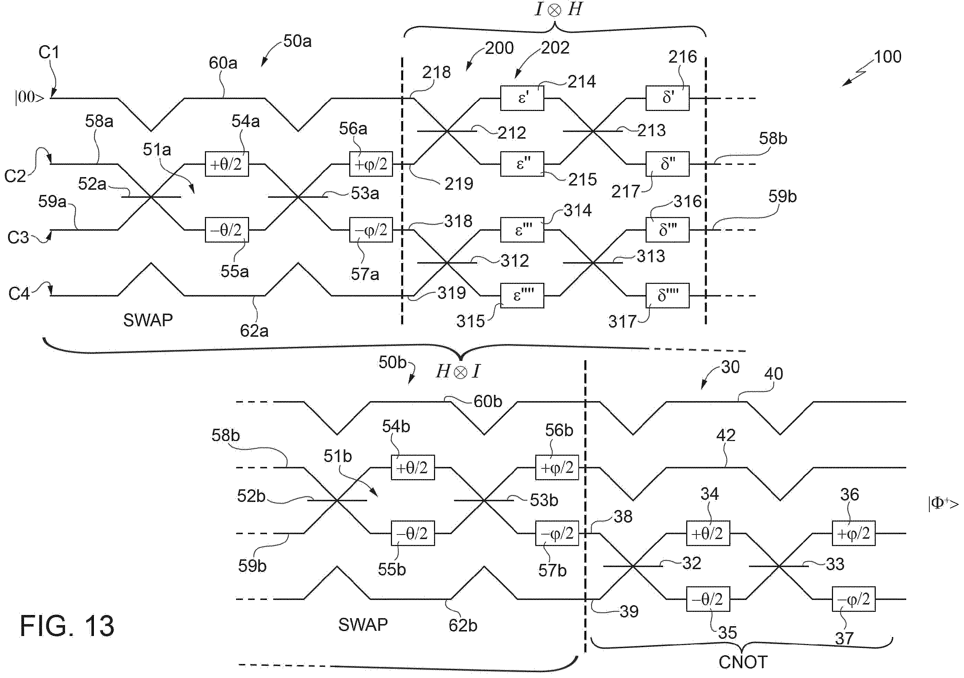

The passages that enable obtaining the entanglement starting from two independent qubits are shown in Figure 12, where the operations performed by the entanglement generator 100 are shown symbolically, the generator (shown in Figure 13) receiving a first and a second qubit in input, indicated as $\left|q_0\right\rangle$ and $\left|q_1\right\rangle$, respectively.

In detail, the entanglement generator 100 sends the first $\left|q_0\right\rangle$ to a Hadamard gate (indicated as H), and then performs a CNOT operation on the qubit in output from the Hadamard gate (which acts as a control bit) and on the second qubit $\left|q_1\right\rangle$ (which acts as a target qubit). As is known, the Hadamard gate maps state |0> to state $\frac{1}{\sqrt{2}}(|0>+|1>)$ and also maps state |1> to state $\frac{1}{\sqrt{2}}(|0>-|1>)$.

It is possible to demonstrate that the entanglement generator 100 transforms the standard basis into the entangled basis:

$$\left|00\right\rangle \Rightarrow \left|\beta_{00}\right\rangle = \frac{1}{\sqrt{2}}\big(\left|00\right\rangle+\left|11\right\rangle\big) = \left|\Phi^+\right\rangle$$

$$\left|10\right\rangle \Rightarrow \left|\beta_{01}\right\rangle = \frac{1}{\sqrt{2}}\big(\left|01\right\rangle+\left|10\right\rangle\big) = \left|\Psi^+\right\rangle$$

$$\left|10\right\rangle \Rightarrow \left|\beta_{10}\right\rangle = \frac{1}{\sqrt{2}}\big(\left|00\right\rangle-\left|11\right\rangle\big) = \left|\Phi^-\right\rangle$$

$$\left|11\right\rangle \Rightarrow \left|\beta_{11}\right\rangle = \frac{1}{\sqrt{2}}\big(\left|01\right\rangle-\left|10\right\rangle\big) = \left|\Psi^-\right\rangle$$

It may also be note that, as shown in Figure 14, it is possible to reverse the operation performed by the entanglement generator 100, since CNOT*CNOT=I and H*H=I; furthermore, by applying the inverse transformation to an entangled state and measuring both qubits, it is possible to determine the value of both the control qubit and the target qubit; in other words, it becomes possible to deterministically perform a Bell measurement, i.e. it is possible to distinguish all four Bell states.

That having been said, the entanglement generator 100 is a Bell state generator (BSG) and can be described by the following relation:

$$BSG = CNOT \cdot (H \otimes I) = CNOT \cdot SWAP \cdot (I \otimes H) \cdot SWAP$$

which is implemented by the entanglement generator 100.

In detail, the entanglement generator 100 comprises a first, a second, a third and a fourth input, as well as a first, a second, a third and a fourth output.

In greater detail, the entanglement generator 100 comprises a first and a second SWAP gate, indicated by references 50a and 50b, respectively, as well as the CNOT gate 30. In Figure 13, the components of the first and the second SWAP gate 50a and 50b previously described with reference to the SWAP gate 50 are indicated by the same reference numerals, with the addition of suffixes "a" and "b, respectively.

The entanglement generator 100 also comprises an additional gate 200, which implements the operation $I \otimes H$.

The additional gate 200 comprises a respective first interferometer 202 and a respective second interferometer 204, each of which is, for example, the same as the previously described interferometer, except where specified otherwise.

In detail, the first interferometer 202 comprises a respective first optical beam splitter 212 and a respective second optical beam splitter 213, as well as four respective phase shifters; thus, the first interferometer 202 comprises a first, a second, a third and a fourth phase shifter 214, 215, 216 and 217. In addition, the first interferometer 202 has a first arm 218 and a second arm 219.

The first arm 218 forms the first optical path of the additional gate 200 and passes through the first and third gates of the first optical beam splitter 212, as well as the first and third gates of the second optical beam splitter 213, while the second arm 219 forms the second optical path of the additional gate 200 and passes through the second and fourth gates of the first optical beam splitter 212, as well as the second and fourth gates of the second optical beam splitter 213. Furthermore, the input and output of the first arm 218 respectively form a first input and a first output of the additional gate 200, while the input and output of the second arm 219 respectively form a second input and a second output of the additional gate 200. The first and third phase shifters 214 and 216 extend along the first arm 218 and respectively introduce a phase shift $\varepsilon'$ and a phase shift $\delta'$; the second and fourth phase shifters 215 and 217 extend along the second arm 219 and respectively introduce a phase shift $\varepsilon''$ and a phase shift $\delta''$. The first and second arms 218 and 219 have the same optical length, unless phase shifts are introduced by the respective phase shifters. The phase shifts $\varepsilon'$ and $\varepsilon''$ are respectively equal to $+n/4$ and $-\pi/4$; the phase shifts $\delta'$ and $\delta''$ are respectively equal to $+\pi/2$ and $-\pi/2$. Furthermore, the relations $\varepsilon'-\varepsilon''<\lambda$ and $\delta'-\delta''<\lambda$ hold in order to enable interference.

The second interferometer 204 comprises a respective first optical beam splitter 312 and a respective second optical beam splitter 313 and, as previously mentioned, is, for example, the same as the first interferometer 202 of the additional gate 200, except where specified otherwise.

In detail, the second interferometer 204 comprises first, a second, a third and a fourth phase shifter 314, 315, 316 and 317. Furthermore, the second interferometer 202 has a first arm 318 and a second arm 319.

The first arm 318 of the second interferometer 204 forms the third optical path of the additional gate 200 and passes through the first and third gates of the first optical beam splitter 312, as well as the first and third gates of the second optical beam splitter 313. The second arm 319 forms the fourth optical path of the additional gate 200 and passes through the second and fourth gates of the first optical beam splitter 312, as well as the second and fourth gates of the second optical beam splitter 313. In addition, the input and output of the first arm 318 respectively form a third input and a third output of the additional gate 200, while the input and output of the second arm 319 respectively form a fourth input and a fourth output of the additional gate 200. The first and third phase shifters 314 and 316 extend along the first arm 318 and respectively introduce a phase shift $\varepsilon'''$ and a phase shift $\delta'''$; the second and fourth phase shifters 315 and 317 extend along the second arm 319 and respectively introduce a phase shift $\varepsilon''''$ and a phase shift $\delta''''$. The first and second arms 318 and 319 have the same optical length, with the exception of the phase shifts introduced by the respective phase shifters. The phase shifts $\varepsilon'''$ and $\varepsilon''''$ are respectively equal to $+n/4$ and $-\pi/4$; the phase shifts $\delta'''$ and $\delta''''$ are respectively equal to $+\pi/2$ and $-\pi/2$. Furthermore, the relations $\varepsilon'''-\varepsilon''''<2\pi$ and $\delta'''-\delta''''<2\pi$ hold in order to enable interference. In other words, the first and the second arm 318 and 319 have optical lengths that differ from each other by less than $2*\lambda$.

That having been said, the additional gate 200 operates in such a way that if a photon is injected in its first input, it exits from the first or second output, in both cases with probability ½. Furthermore, if a photon is injected in the second input of the additional gate 200, it exits from the first or second output, in both cases with probability ½, but in the case where it exits from the second output, the photon undergoes a phase shift equal to n (with respect to the phase that the photon would have if it had been injected in the first input of the additional gate 200). Similarly, if a photon is injected in the third input of the additional gate 200, it exits from the third or fourth output of the additional gate, in both cases with probability ½. Furthermore, if a photon is injected in the fourth input of the additional gate 200, it exits from the third or fourth output, in both cases with probability ½, but in the case where it exits from the fourth output, the photon undergoes a phase shift equal to $\pi$ (with respect to the phase that the photon would have if it had been injected in the third input of the additional gate 200).

Again with reference to the entanglement generator 100 as a whole, the first, second, third and fourth outputs of the first SWAP gate 50a are respectively connected to the first, second, third and fourth inputs of the additional gate 200. In addition, the first, second, third and fourth outputs of the additional gate 200 are respectively connected to the first, second, third and fourth inputs of the second SWAP gate 50b. The first, second, third and fourth outputs of the second SWAP gate 50b are respectively connected to the first, second, third and fourth inputs of the CNOT gate 30, the outputs of which form corresponding outputs of the entanglement generator 100.

In practice, the first waveguide 60a of the first SWAP gate 50a, the first arm 218 of the first interferometer 202 of the additional gate 200, the first waveguide 60b of the second SWAP gate 50b and the first waveguide 40 of the CNOT gate 30 form a first optical path C1 of the entanglement generator 100.

The first arm 58a of the interferometer 51a of the first SWAP gate 50a, the second arm 219 of the first interferometer 202 of the additional gate 200, the first arm 58b of the interferometer 51b of the second SWAP gate 50b and the second waveguide 42 of the CNOT gate 30 form a second optical path C2 of the entanglement generator 100.

The second arm 59a of the interferometer 51a of the first SWAP gate 50a, the first arm 318 of the second interferometer 204 of the additional gate 200, the second arm 59b of the interferometer 51b of the second SWAP gate 50b and the first arm 38 of the interferometer 31 of the CNOT gate 30 form a third optical path C3 of the entanglement generator 100.

The second waveguide 62a of the first SWAP gate 50a, the second arm 319 of the second interferometer 204 of the additional gate 200, the second waveguide 62b of the second SWAP gate 50b and the second arm 39 of the interferometer 31 of the CNOT gate 30 form a fourth optical path C4 of the entanglement generator 100.

The first, second, third and fourth optical paths C1, C2, C3 and C4 are coupled to one another due to the presence of the interferometers.

In practice, as shown in Figure 13, injecting a photon in the first optical path C1 of the entanglement generator 100 is the equivalent to exciting state |00>; furthermore, it is possible to demonstrate that the output state is given by the coherent superposition of a single photon in the first and in the fourth optical path C1 and C4 of the entanglement generator 100, and so corresponds to state $|\Phi^+>$.

The alternative injection of the photon in the second, or in the third, or in the fourth input of the entanglement generator 100 is the equivalent to exciting state |01>, state 110> and state |11>, respectively; in these cases, the output state is equal to state $|\psi^+>$, state $|\Phi^->$ and state $|\psi^->$, respectively. For example, in the case of state $|\psi^->$, it is given by the coherent superposition of a single photon in the second and third optical paths C2 and C3 of the entanglement generator 100.

As previously mentioned, by using the entanglement generator 100 in the opposite direction, i.e. by injecting the states in the outputs instead of in the inputs and, in particular, by injecting in the entangled outputs states, it is possible to perform a perfect Bell measurement.

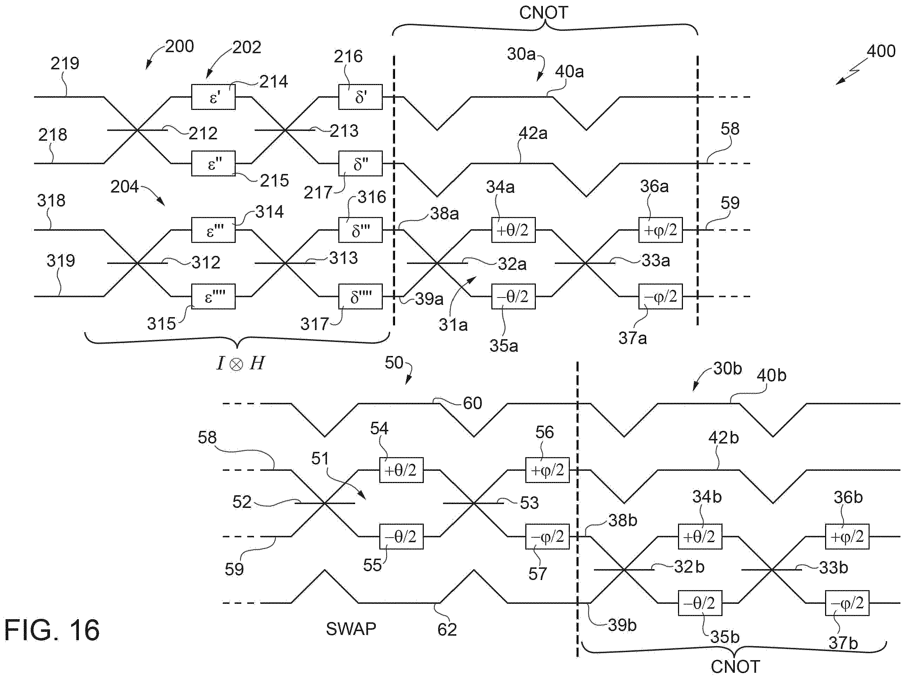

As shown in Figure 15, a different embodiment of the entanglement generator may be obtained by switching the first qubit $|q_0>$ with the second qubit $|q_1>$. It is possible to demonstrate that in this case the entanglement generator takes the form shown in Figure 16, where the entanglement generator is indicated by reference numeral 400.

In detail, the entanglement generator 400 comprises the additional gate 200, the SWAP gate 50 and a first and a second CNOT gate, indicated by references 30a and 30b, respectively. In Figure 16, the components of the first and second CNOT gates 30a and 30b previously described with reference to CNOT gate 30 are indicated with the same reference numerals, with the addition of suffixes "a" and "b", respectively.

In greater detail, the first, second, third and fourth inputs of the additional gate 200 respectively form the first, second, third and fourth inputs of the entanglement generator 400. In addition, the first, second, third and fourth outputs of the additional gate 200 are respectively connected to the first, second, third and fourth inputs of the first CNOT gate 30a. The first, second, third and fourth outputs of the first CNOT gate 30a are respectively connected to the first, second, third and fourth inputs of the SWAP gate 50. The first, second, third and fourth outputs of the SWAP gate 50 are respectively connected to the first, second, third and fourth inputs of the second CNOT gate 30b, the outputs of which form corresponding outputs of the entanglement generator 400.

In use, by injecting a photon, for example, in the fourth input of the entanglement generator 400, state |11> becomes excited; in this case, the output state is given by the coherent superposition a single photon in the second and in the third output of the entanglement generator 400, corresponding to state $|\psi^->$.

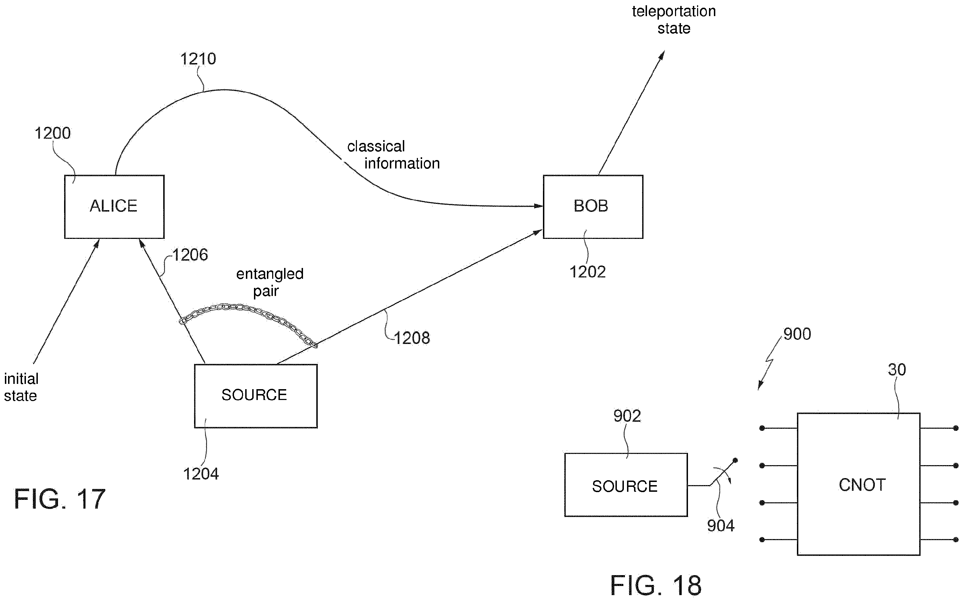

A further application example of the present optical structure is given by so-called teleportation, i.e. the possibility of transmitting quantum data over long distances, as shown in Figure 17.

In detail, a first and a second quantum communication device 1200 and 1202, which will hereinafter be referred to as Alice and Bob, are spatially separate and are optically coupled to an optical source 1204, via a first and a second optical link 1206 and 1208, respectively.

In greater detail, the source 1204 generates a pair of maximally entangled photons, in the state

$$\left|\Phi^+\right\rangle = \frac{1}{\sqrt{2}}\left(\left|00\right\rangle + \left|11\right\rangle\right),$$

on the first and the second optical link 1206 and 1208. Furthermore, Alice wishes to teleport an unknown state |ψ> to Bob.

In practice, assuming that Alice receives a qubit in a state that is unknown to her (|ψ>=a|0>+b|1>), Alice wishes to teleport the received qubit to Bob. With regard to this, if the qubit was known, it would be sufficient to communicate the related information to Bob in the classical manner.

Since Alice does not know the above-mentioned state |ψ>, she cannot measure it to determine the related information, but can resort to state |Φ⁺>, shared with Bob.

In particular, the overall state of the three qubits is given by:

$$\left|\psi\right\rangle\left|\Phi^+\right\rangle = \left(a\left|0\right\rangle + b\left|1\right\rangle\right)\frac{1}{\sqrt{2}}\left(\left|00\right\rangle + \left|11\right\rangle\right)$$

which can be rewritten as:

$$\left|\psi\right\rangle\left|\Phi^+\right\rangle = \frac{1}{2}\left|\Phi^+\right\rangle\left(a\left|0\right\rangle + b\left|1\right\rangle\right) + \frac{1}{2}\left|\Phi^-\right\rangle\left(a\left|0\right\rangle - b\left|1\right\rangle\right) + \frac{1}{2}\left|\Psi^+\right\rangle\left(b\left|0\right\rangle + a\left|1\right\rangle\right) - \frac{1}{2}\left|\Psi^-\right\rangle\left(b\left|0\right\rangle - a\left|1\right\rangle\right)$$

where |Φ⁺>, |Φ⁻>, |ψ⁺> and |ψ⁻> form the orthonormal Bell basis of Alice's two qubits (the first two qubits belong to Alice, while the third qubit belongs to Bob). From the previous relation, it may be noted that for each state of Alice's two qubits there is a corresponding state of Bob's qubit.

That having been said, following reception of the state |ψ>, Alice carries out projective measurements on her two qubits in the Bell basis.

In particular, Alice can use, in the opposite direction, one of the previously shown embodiments of the entanglement generator, as mentioned with reference to Figure 14, so as to carry out a Bell measurement. In this way, Alice randomly measures one of the four Bell states, with equal probability. For example, if Alice obtains state |ψ⁺>, the three-qubit state collapses into state |ψ⁺> (b|0>+a|1>). Alice then sends the result of each measurement to Bob, in the classical manner, for example via a communications channel 1210 interposed between Alice and Bob. The purpose of this communication is to inform Bob regarding the operation to perform in order to obtain the state that Alice intends to teleport.

Then, having assumed that Alice has measured state |ψ⁺>, Bob applies a unitary transformation to his qubit, which simulates a logical negation operation (NOT), so as to transform the state of his qubit into state (a|0>+b|1>), i.e. precisely the state that Alice meant to teleport. In the event of Alice having measured a different Bell state, Bob would have had to perform a different transformation from logical negation; in particular, it is possible to demonstrate that Bob would have had to perform the following operations on his qubit:

- the operation corresponding to the so-called Pauli matrix $\sigma_z$, if Alice had measured state |Φ⁻>;
- the operation corresponding to the so-called Pauli matrix $\sigma_y$, if Alice had measured state |ψ⁻>; and
- multiplication by the identity matrix, if Alice had measured state |Φ⁺> (in other words, Bob must not perform any operation).

In greater detail, in order to implement teleportation, it is possible to make use of the optical structure 2000 shown in Figure 19, which implements the operations abstractly shown in Figure 20. Without any loss of generality, it is assumed in Figure 20 that the generation of an entangled state takes place on the basis of two qubits |0> and on the basis of the entanglement generator 100.

In detail, the optical structure 2000, which will hereinafter be referred to as the teleportation structure 2000, comprises a preparation device 2002 designed to receive a photon or a coherent state with an arbitrary number of photons and to prepare the (unknown) state |ψ>=a|0>+b|1>. For example, the preparation device 2002 is formed by a respective Mach-Zehnder interferometer designed to receive the photon at its input and having two outputs respectively connected as described below; the interferometer is configured in such a way that a and b represent the probability amplitudes with which a photon exits on each of the two outputs of the interferometer.

The teleportation structure 2000 also comprises a first and a second entanglement generator, for example, of the type shown in Figure 13, and indicated by references 100a and 100b, respectively. The first, second, third and fourth optical paths of the first entanglement generator 100a respectively form a first, a second, a third and a fourth optical path P1, P2, P3 and P4 of the teleportation structure 2000. The first, second, third and fourth optical paths of the second entanglement generator 100b respectively form a fifth, a sixth, a seventh and an eighth optical path P5, P6, P7 and P8 of the teleportation structure 2000. The two outputs of the preparation device 2002 are respectively connected to the inputs of the first and fifth optical paths P1 and P5 of the teleportation structure 2000. With regard to this, please note that in Figure 19, for simplicity of illustration, the interferometers are shown schematically as optical path intersections, without showing the presence of the related phase shifters. Furthermore, also the optical paths are shown in a particularly schematized manner (for example, the bends designed to ensure the same optical lengths, but for the phase shifts introduced by the phase shifters, are not shown). In addition, as previously mentioned, embodiments are however possible in which the two outputs of the preparation device 2002 are respectively connected to the inputs of the second and sixth optical paths P2 and P6, or of the third and seventh optical paths P3 and P7, or of the fourth and eighth optical paths P4 and P8 of the teleportation structure 2000.

The teleportation structure 2000 also comprises a structure 2010, which will hereinafter be referred to as the structure $CNOT \otimes I$ 2010, as it implements the operation $CNOT \otimes I$.

Structure $CNOT \otimes I$ 2010 includes a first, a second, a third and a fourth optical path S1, S2, S3 and S4, which are equal to one another, are decoupled from one another and are respectively connected to the first, second, third and fourth optical paths of the first entanglement generator 100a, so as to respectively form the first, second, third and fourth optical paths P1, P2, P3 and P4 of the teleportation structure 2000.

Structure $CNOT \otimes I$ 2010 also includes a fifth, a sixth, a seventh and an eighth optical path S5, S6, S7 and S8, which are respectively connected to the outputs of the first, second, third and fourth optical paths of the second entanglement generator 100b, so as to respectively form the fifth, sixth, seventh and eighth optical paths P5, P6, P7 and P8 of the teleportation structure 2000.

Structure $CNOT \otimes I$ 2010 also includes four respective interferometers, and in particular includes a first, a second, a third and a fourth interferometer, which are indicated by references T1, T2, T3 and T4, respectively, and are the same as the interferometer described with reference, for example, to the CNOT gate 30, i.e. they operate like switches that swap the paths followed by the photons. In detail, the first interferometer T1 couples the sixth and seventh optical paths S6 and S7; the second interferometer T2 couples the fifth and sixth optical paths S5 and S6, after the sixth optical path S6 has been coupled to the seventh optical path S7; the third interferometer T3 couples the seventh and eighth optical paths S7 and S8, after the seventh optical path S7 has been coupled to the sixth optical path S6; and the fourth interferometer T4 couples the sixth and seventh optical paths S6 and S7 again, after the latter have been coupled to the fifth and eighth optical paths S5 and S8, respectively.

The teleportation structure 2000 also comprises a structure 2020, which will hereinafter be referred to as the structure $H \otimes I \otimes I$ 2020, as it implements the operation $H \otimes I \otimes I$.

Structure $H \otimes I \otimes I$ 2020 includes a first, a second, a third, a fourth, a fifth, a sixth, a seventh and an eighth optical path W1, W2, W3, W4, W5, W6, W7 and W8, which are respectively connected to the outputs of the first, second, third, fourth, fifth, sixth, seventh and eighth optical paths S1, S2, S3, S4, S5, S6, S7 and S8 of structure $CNOT \otimes I$ 2010, so as to respectively form the first, second, third, fourth, fifth, sixth, seventh and eighth optical paths P1, P2, P3, P4, P5, P6, P7 and P8 of the teleportation structure 2000. Furthermore, structure $H \otimes I \otimes I$ 2020 includes a first, a second, a third, a fourth, a fifth, a sixth, a seventh, an eighth, a ninth, a tenth, an eleventh, a twelfth, a thirteenth, a fourteenth, a fifteenth and a sixteenth interferometer K1, K2, K3, K4, K5, K6, K7, K8, K9, K10, K11, K12, K13, K14, K15 and K16; to qualitatively describe the positions of these sixteen interferometers, the fact that these have a distributed form is ignored and a reference system is assumed having origin in the input of structure $H \otimes I \otimes I$ 2020 and oriented towards the output of structure $H \otimes I \otimes I$ 2020, parallel to the optical paths of structure $H \otimes I \otimes I$ 2020. Furthermore, the sixteen interferometers are of the type described with reference to the CNOT gate 30, and so operate like deterministic switches, except for the seventh, eighth, ninth and tenth interferometers K7, K8, K9 and K10, each of which is the same as, for example, the first interferometer 202 of the additional gate 200.

In detail, at a distance $l_1$, the first interferometer K1 couples the fourth and fifth optical paths W4 and W5.

At a distance $l_2$, the second interferometer K2 couples the fifth and sixth optical paths W5 and W6; similarly, the third interferometer K3 couples the third and fourth optical paths W3 and W4.

At a distance $l_3$, the fourth interferometer K4 couples the sixth and seventh optical paths W6 and W7. The fifth interferometer K5 couples the fourth and fifth optical paths W4 and W5. The sixth interferometer K6 couples the second and third optical paths W2 and W3.

At a distance $l_4$, the seventh interferometer K7 couples the seventh and eighth optical paths W7 and W8. The eighth interferometer K8 couples the fifth and sixth optical paths W5 and W6. The ninth interferometer K9 couples the third and fourth optical paths W3 and, W4. The tenth interferometer K10 couples the first and second optical paths W1 and W2.

At a distance $l_5$, the eleventh interferometer K11 couples the sixth and seventh optical paths W6 and W7. The twelfth interferometer K12 couples the fourth and fifth optical paths W4 and W5. The thirteenth interferometer K13 couples the second and third optical paths W2 and W3.

At a distance $l_6$, the fourteenth interferometer K14 couples the fifth and sixth optical paths W5 and W6. The fifteenth interferometer K15 couples the third and fourth optical paths W3 and W4.

At a distance $l_7$, the sixteenth interferometer K16 couples the fourth and fifth optical paths W4 and W5.

In general, given a distance $l_x$, each previously described interferometer placed at a distance $l_x$ can find itself at a different distance, as long as it is not at a distance i) lesser than the distance at which an interferometer described as placed at distance $l_{x-1}$ finds itself, or ii) greater than the distance at which an interferometer described as placed at distance $l_{x+1}$ finds itself. Furthermore, regarding both structure $H \otimes I \otimes I$ and structure $CNOT \otimes I$, the respective optical paths have the same optical length, without the phase shifts introduced by the phase shifters of the respective interferometers.

In use, the first and the second entanglement generator 100a and 100b output the states $a|0>|\Phi^+>$ and $b|1>|\Phi^+>$, respectively, on which the structure $CNOT \otimes I$ 2010 and the structure $H \otimes I \otimes I$ 2020 perform a Bell measurement, which in particular takes place between state $|\psi>$ and one of the two entangled states generated. Therefore, the outputs of the first and second optical paths P1 and P2 of the teleportation structure 2000 provide the state $a|0>+b|1>$, which corresponds to $|\Phi^+>$; the outputs of the third and fourth optical paths P3 and P4 provide the state $b|0>+a|1>$, which corresponds to $|\psi^+>$; the outputs of the fifth and sixth optical paths P5 and P6 provide the state $a|0>-b|1>$, which corresponds to $|\Phi^->$; and the outputs of the seventh and sixth optical paths P7 and P8 provide the state $b|0>-a|1>$, which corresponds to $|\Psi^->$. Therefore, the state to be teleported is output from the first and second optical paths P1 and P2, which can however also be obtained starting from the other outputs of the teleportation structure 2000, for example (as previously explained):

- connecting a NOT gate (not shown) to the outputs of the third and fourth optical paths P3 and P4;
- connecting a phase shifter device (not shown) to the outputs of the fifth and sixth optical paths P5 and P6 that is designed to introduce a phase shift of n between these optical paths;
- connecting a NOT gate (not shown) and a phase shifter device (not shown) to the outputs of the seventh and eighth optical paths P7 and P8, the phase shifter device designed to introduce a phase shift of n between these optical paths.

The advantages obtainable with the present structure clearly emerge from the foregoing description and derive from the fact that the present optical structure enables implementing a linear combination of occupation states, by coherent electromagnetic fields, of propagation modes, each propagation mode being precisely associated with a corresponding state of a basis, such as the so-called canonical basis for example.

In detail, the present structure enables implementing a scalable quantum computer, based, for example, on integrated optical technologies, without the need to resort to multiple quantum sources, nor multiple single-photon detectors, nor so-called ancillary states.

In greater detail, the present structure implements a universal quantum logic gate that has a deterministic behaviour with regard to the probability of obtaining a correct result. Furthermore, the scalability of the present structure enables implementing more complex devices, such as an entanglement generator or a teleportation device for example, in a particularly efficient manner.

In addition, the present structure enables extending number of qubits, for example, starting from a single photon. Again with reference, by way of example, to the case where the physical carrier is of an optical type, it is no longer necessary to repeat the computation multiple times, with single-photon states, but it is possible to perform an operation once only, employing a pulse formed by a plurality of photons. In fact, each photon only interacts with itself and contributes to the overall result of the operation. In this way, it is possible to use classical types of optical sources and detectors.

Still with reference, by way of example, to the case where the physical carrier is of an optical type, the operations can be performed using coherent states with arbitrary average numbers of photons; in this case, the probabilities of obtaining a state corresponding to the amplitudes of the signals in output on the corresponding optical paths. With regard to this, it is observed that it is possible to use optical pulses lasting, for example, 200 femtoseconds, still having lengths of approximately 60 $\mu m$, and therefore greater than the wavelength, so as to ensure coherency within the interferometers.

Again with reference to the Mach-Zehnder interferometers, these ensure that each propagation mode locally couples with only one other propagation mode, although as a whole, each propagation mode can be coupled with more than one other propagation mode. In other words, the propagation modes locally couple pairwise.

Lastly, the present structure is reconfigurable, thereby allowing various types of problems to be solved, starting from a same device.

Purely by way of example, Figure 18 shows a quantum computation system 900 including, without any loss of generality, the CNOT gate 30, a source 902, for example of the single-photon type or of the type capable of generating optical pulses with an arbitrary average number of photons, and a link stage 904, formed, for example, by an optical switch of known type. The link stage 904 is controllable in way such as to route each photon (or pulse) generated by the source 902 to any one of the four inputs of the CNOT gate 30.

Finally, it is clear that modifications and variants can be made with regard to the structure without departing from the scope of the present invention, as defined by the appended claims.

For example, the guided optical paths, and also the interferometers, may be formed on the basis of any of the currently available optical technologies. Thus, the waveguides can be formed, for example, from gallium arsenide (GaAs), or from gallium nitride (GaN), or even from plasmonic substrates. Furthermore, the phase shifts introduced by the interferometers may differ with respect to that described, according to the (known) type and geometry of each interferometer. The phase shift values indicated in the foregoing are also to be considered purely as examples.

In general, each optical beam splitter may be replaced by any device capable of acting as a directional coupler, preferably of the 50/50 type. Furthermore, the waveguides may be totally or partially replaced by corresponding portions of free space, where propagation takes place in an unguided manner; in other words, each of the described propagation modes may be formed entirely or partially in free space. Thus, as previously mentioned, the occupation states refer to propagation modes of a structure for electromagnetic propagation, not necessarily of the guided type.

Again, with regard to the arrangement of the phase shifters of each interferometer and the phase shifts they introduce, these may be different with respect to that described. For example, with reference to the interferometer of a CNOT gate or of a SWAP gate, the second phase shifter could be absent, and the first phase shifter could introduce a phase shift equal to $\theta$ (or vice versa); similarly, the fourth phase shifter could be absent, and the third phase shifter could introduce a phase shift equal to $\varphi$ (or vice versa).

As mentioned, embodiments of the present structure are also possible that operate on states formed by more than two qubits. In particular, in the N-qubit case (where N is an integer greater than one), the structure allows $2^N$ propagation modes, coupled to one another on the basis of the logic function to be implemented.

Finally, as previously mentioned, the structure may be such that propagation modes are defined, for example, by microstrips or other elements known in the field of microwave technologies.

**Claims**

1. An electromagnetic structure configured for processing quantum information and for admitting $2^N$ electromagnetic propagation modes (18, 19; 38, 39, 40, 42; 58, 59, 60, 62; C1, C2, C3, C4), at least one pair of said propagation modes being coupled together; and wherein each of said propagation modes is associated with a corresponding N-qubit quantum state indicative of the occupation of the propagation mode by a coherent state that propagates in said electromagnetic structure, and wherein N>1; said electromagnetic structure being connectable to an electromagnetic source configured for exciting in input to the electromagnetic structure an input quantum state, on the basis of which the electromagnetic structure generates an output quantum state, said input quantum state being formed by the quantum superposition of a single photon or by a coherent state with an arbitrary average number $\mu$ of photons.

2. The electromagnetic structure according to claim 1, said electromagnetic structure (30; 50; 100; 400; 2000) being of the optical type and forming $2^N$ optical paths, each of which defines a corresponding propagation mode of said $2^N$ propagation modes.

3. A CNOT logic gate comprising an electromagnetic structure (30) according to claim 1 or 2, said electromagnetic structure admitting a first and a second propagation mode (40, 42) decoupled from each other and including an interferometer (31) which admits a third and a fourth propagation mode (38, 39), said interferometer being decoupled from the first and second propagation modes and being configured in such a way that, if a coherent electromagnetic field is injected alternatively in the third or in the fourth propagation mode, the electromagnetic field is then coupled with the fourth or third propagation mode, respectively; and wherein the first, second, third and fourth propagation modes are associated with states |00>, |01>, |10> and |11>, respectively.

4. A SWAP logic gate comprising an electromagnetic structure (50) according to claim 1 or 2, said electromagnetic structure admitting a respective first propagation mode (60) and a respective fourth propagation mode (62), decoupled from each other; said electromagnetic structure including a respective interferometer (51), which is decoupled from the first and fourth propagation modes, admits a second and a third propagation mode (58, 59) of the SWAP gate and is configured in such a way that, if a coherent electromagnetic field is injected alternatively in the second or in the third propagation mode of the SWAP gate, the electromagnetic field is then coupled with the third or the second propagation mode, respectively, of the SWAP gate.

5. An entangled state generator comprising:

- a CNOT gate (30) according to claim 3;
- a first and a second SWAP gate (50a, 50b); and
- an additional gate (200);

wherein each one of said first and second SWAP gates admits a respective first propagation mode (60a; 60b) and a respective fourth propagation mode (62a; 62b), decoupled from each other, and includes a respective interferometer (51a; 51b), which is decoupled from the first and fourth propagation modes, admits a second and a third propagation mode (58a, 59a; 58b, 59b) of the SWAP gate and is configured in such a way that, if a coherent electromagnetic field is injected alternatively in the second or in the third propagation mode of the SWAP gate, the electromagnetic field is then coupled with the third or the second propagation mode, respectively, of the SWAP gate; and wherein said additional gate comprises:

- a respective first interferometer (202), which admits a first and a second propagation mode (218, 219) of the additional gate and is configured in such a way that:

- if a coherent electromagnetic field is injected into the first propagation mode of the additional gate, the electromagnetic field is then coupled, alternatively, to the first or to the second propagation mode of the additional gate, with equal probabilities; and
- if a coherent electromagnetic field is injected into the second propagation mode of the additional gate, the electromagnetic field is then coupled, alternatively, to the first or to the second propagation mode of the additional gate, with equal probabilities and moreover, in the case of coupling to the second propagation mode, it undergoes a phase shift of n radians; and

- a respective second interferometer (204), which admits a third and a fourth propagation mode (318, 319) of the additional gate and is configured in such a way that:

- if a coherent electromagnetic field is injected into the third propagation mode of the additional gate, the electromagnetic field is then coupled, alternatively, to the third or to the fourth propagation mode of the additional gate, with equal probabilities;
- if a coherent electromagnetic field is injected into the fourth propagation mode of the additional gate, the electromagnetic field is then coupled, alternatively, to the third or to the fourth propagation mode of the additional gate, with equal probabilities and moreover, in the case of coupling to the fourth propagation mode, it undergoes a phase shift of n radians;

and wherein the first, second, third and fourth propagation modes of the additional gate and of each of said first and second SWAP gates are associated with states |00>, |01>, |10> and |11>, respectively.

6. An entangled state generator comprising:

- a first and a second CNOT gate (30a, 30b) according to claim 3;
- a SWAP gate (50); and
- an additional gate (200);

wherein said SWAP gate includes:

- a respective first propagation mode (60) and a respective fourth propagation mode (62), decoupled from each other; and
- a respective interferometer (51), which is decoupled from the first and the fourth propagation mode of the SWAP gate, admits a second and a third propagation mode (58, 59) of the SWAP gate and is configured in such a way that, if a coherent electromagnetic field is injected alternatively in the second or in the third propagation mode of the SWAP gate, the electromagnetic field is then coupled with the third or the second propagation mode, respectively, of the SWAP gate;

and wherein said additional gate comprises:

- a respective first interferometer (202), which admits a first and a second propagation mode (218, 219) of the additional gate and is configured in such a way that:

- if a coherent electromagnetic field is injected into the first propagation mode of the additional gate, the electromagnetic field is then coupled, alternatively, to the first or to the second propagation mode of the additional gate, with equal probabilities; and
- if a coherent electromagnetic field is injected into the second propagation mode of the additional gate, the electromagnetic field is then coupled, alternatively, to the first or to the second propagation mode of the additional gate, with equal probabilities and moreover, in the case of coupling to the second propagation mode, it undergoes a phase shift of n radians; and

- a respective second interferometer (204), which admits a third and a fourth propagation mode (318, 319) of the additional gate and is configured in such a way that:

- if a coherent electromagnetic field is injected into the third propagation mode of the additional gate, the electromagnetic field is then coupled, alternatively, to the third or to the fourth propagation mode of the additional gate, with equal probabilities;
- if a coherent electromagnetic field is injected into the fourth propagation mode of the additional gate, the electromagnetic field is then coupled, alternatively, to the third or to the fourth propagation mode of the additional gate, with equal probabilities and moreover, in the case of coupling to the fourth propagation mode, it undergoes a phase shift of n radians;

and wherein the first, second, third and fourth propagation modes of the additional gate and of the SWAP gate are associated with states |00>, |01>, |10> and |11>, respectively.

7. A quantum teleportation system comprising an electromagnetic structure according to claim 1 or 2, wherein N>2, said electromagnetic structure (2000) admitting eight propagation modes associated with corresponding states that can be encoded with three qubits, the first four propagation modes being associated with states wherein the first qubit is |0> and the second four propagation modes being associated with states wherein the second qubit is |1>, said electromagnetic structure including a first portion (100a, 100b) that can be coupled to an electromagnetic source (2002) so as to inject a coherent electromagnetic field in one of said first four propagation modes, with a first probability $a^2$, or in one of said second four propagation modes, with a second probability $b^2$, said first structure portion being configured to generate a state (a|0>+b|1>) BELL, wherein BELL indicates one of the four Bell states; said electromagnetic structure further including a second portion (2010, 2020), which is coupled to the first portion and is configured to perform a Bell measurement on two qubits so that, in output from said second portion, there is state a|0>+b|1> on a first pair of said propagation modes, there is state b|0>+a|1> on a second pair of said propagation modes, there is state a|0>-b|1> on a third pair of said propagation modes and there is state b|0>-a|1> on a fourth pair of said propagation modes.

8. A method for processing quantum information comprising the steps of:

- providing an electromagnetic structure (30; 50; 100; 400; 2000) according to any one of claims 1-2; and
- injecting a coherent electromagnetic field in at least one of the propagation modes of the electromagnetic structure.

9. The method according to claim 8, comprising generating entangled states by means of said electromagnetic structure (100; 400).

10. The method according to claim 9, wherein said step of generating entangled states includes generating entangled states by means of a generator (100) formed by said electromagnetic structure and including:

- a CNOT gate (30);
- a first and a second SWAP gate (50a, 50b); and
- an additional gate (200);

wherein the CNOT gate admits a respective first propagation mode (40) and a respective second propagation mode (42), decoupled from each other, the CNOT gate further comprising a respective interferometer (31), which is decoupled from the first and second propagation modes of the CNOT gate, admits a third and a fourth propagation mode (38, 39) of the CNOT gate and is configured in such a way that, if a coherent electromagnetic field is injected alternatively in the third or in the fourth propagation mode, the electromagnetic field is then coupled with the fourth or the third propagation mode, respectively;

and wherein each one of said first and second SWAP gates admits a respective first propagation mode (60a; 60b) and a respective fourth propagation mode (62a; 62b), decoupled from each other, and includes a respective interferometer (51a; 51b), which is decoupled from the first and fourth propagation modes of the SWAP gate, admits a second and a third propagation mode (58a, 59a; 58b, 59b) of the SWAP gate and is configured in such a way that, if a coherent electromagnetic field is injected alternatively in the second or in the third propagation mode of the SWAP gate, the electromagnetic field is then coupled with the third or the second propagation mode, respectively, of the SWAP gate;

and wherein said additional gate comprises:

- a respective first interferometer (202), which admits a first and a second propagation mode (218, 219) of the additional gate and is configured in such a way that:

- if a coherent electromagnetic field is injected into the first propagation mode of the additional gate, the electromagnetic field is then coupled, alternatively, to the first or to the second propagation mode of the additional gate, with equal probabilities;
- if a coherent electromagnetic field is injected into the second propagation mode of the additional gate, the electromagnetic field is then coupled, alternatively, to the first or to the second propagation mode of the additional gate, with equal probabilities and moreover, in the case of coupling to the second propagation mode, it undergoes a phase shift of n radians; and

- a respective second interferometer (204), which admits a third and a fourth propagation mode (318, 319) of the additional gate and is configured in such a way that:

- if a coherent electromagnetic field is injected into the third propagation mode of the additional gate, the electromagnetic field is then coupled, alternatively, to the third or to the fourth propagation mode of the additional gate, with equal probabilities; and
- if a coherent electromagnetic field is injected into the fourth propagation mode of the additional gate, the electromagnetic field is then coupled, alternatively, to the third or to the fourth propagation mode of the additional gate, with equal probabilities and moreover, in the case of coupling to the fourth propagation mode, it undergoes a phase shift of n radians;

and wherein the first, second, third and fourth propagation modes of the additional gate and of each of said first and second SWAP gates are associated with states |00>, |01>, |10> and |11>, respectively.

11. The method according to claim 9, wherein said step of generating entangled states includes generating entangled states by means of a generator (400) formed by said electromagnetic structure and including:

- a first and a second CNOT gate (30a, 30b);
- a SWAP gate (50); and
- an additional gate (200);

wherein each one of the first and the second CNOT gate comprises a respective first propagation mode (40) and a respective second propagation mode (42), decoupled from each other, the CNOT gate further comprising a respective interferometer (31), which forms a third and a fourth propagation mode (38, 39) of the CNOT gate, is decoupled from the first and second propagation modes of the CNOT gate and is configured in such a way that, if a coherent electromagnetic field is injected alternatively in the third or in the fourth propagation mode, the electromagnetic field is then coupled with the fourth or the third propagation mode, respectively; wherein said SWAP gate includes:

- a respective first propagation mode (60) and a respective fourth propagation mode (62), decoupled from each other; and
- a respective interferometer (51), which admits a second and a third propagation mode (58, 59) of the SWAP gate, is decoupled from the first and fourth propagation modes of the SWAP gate and is configured in such a way that, if a coherent electromagnetic field is injected alternatively in the second or in the third propagation mode of the SWAP gate, the electromagnetic field is then coupled with the third or the second propagation mode, respectively, of the SWAP gate;

wherein said additional gate comprises:

- a respective first interferometer (202), which admits a first and a second propagation mode (218, 219) of the additional gate and is configured in such a way that:

- if a coherent electromagnetic field is injected into the first propagation mode of the additional gate, the electromagnetic field is then coupled, alternatively, to the first or to the second propagation mode of the additional gate, with equal probabilities;
- if a coherent electromagnetic field is injected into the second propagation mode of the additional gate, the electromagnetic field is then coupled, alternatively, to the first or to the second propagation mode of the additional gate, with equal probabilities and moreover, in the case of coupling to the second propagation mode, it undergoes a phase shift of n radians; and

- a respective second interferometer (204), which admits a third and a fourth propagation mode (318, 319) of the additional gate and is configured in such a way that:

- if a coherent electromagnetic field is injected into the third propagation mode of the additional gate, the electromagnetic field is then coupled, alternatively, to the third or to the fourth propagation mode of the additional gate, with equal probabilities; and
- if a coherent electromagnetic field is injected into the fourth propagation mode of the additional gate, the electromagnetic field is then coupled, alternatively, to the third or to the fourth propagation mode of the additional gate, with equal probabilities and moreover, in the case of coupling to the fourth propagation mode, it undergoes a phase shift of n radians;

and wherein the first, second, third and fourth propagation modes of each gate of the first and the second CNOT gate, the SWAP gate and the additional gate are associated with states |00>, |01>, |10> and |11>, respectively.

## Patentansprüche

1. Elektromagnetische Struktur, die für das Verarbeiten von Quanteninformationen und zum Zulassen von $2^N$ elektromagnetischen Ausbreitungsmodi (18, 19; 38, 39, 40, 42; 58, 59, 60, 62; CI, C2, C3, C4) konfiguriert ist, wobei wenigstens ein Paar von den Ausbreitungsmodi miteinander gekoppelt ist; und
wobei jedes der Ausbreitungsmodi einem entsprechenden N-Qubit-Quantenzustand zugehörig ist, der die Besetzung des Ausbreitungsmodus durch einen kohärenten Zustand angibt, der sich in der elektromagnetischen Struktur ausbreitet, und wobei N>1 ist;
wobei die elektromagnetische Struktur mit einer elektromagnetischen Quelle verbunden werden kann, zum Anregen eines Eingangsquantenzustands bei dem Eingang in die elektromagnetische Struktur, auf der Grundlage auf der die elektromagnetische Struktur einen Ausgangsquantenzustand erzeugt, wobei der Eingangsquantenzustand durch die Quantenüberlagerung eines einzelnen Photons ausgebildet wird oder durch einen kohärenten Zustand mit einer beliebigen durchschnittlichen Anzahl $\mu$ von Photonen, konfiguriert ist.

2. Elektromagnetische Struktur nach Anspruch 1, wobei die elektromagnetische Struktur (30; 50; 100; 400; 2000) eine optische Art ist und $2^N$ optische Pfade ausbildet, die jeweils einen entsprechenden Ausbreitungsmodus der $2^N$ Ausbreitungsmodi definieren.

3. CNOT-Logikgatter umfassend eine elektromagnetische Struktur (30) nach Anspruch 1 oder 2, wobei die elektromagnetische Struktur einen ersten und einen zweiten Ausbreitungsmodus (40, 42) zulässt, die voneinander entkoppelt sind und ein Interferometer (31) beinhalten, das einen dritten und einen vierten Ausbreitungsmodus (38, 39) zulässt, wobei das Interferometer von dem ersten und dem zweiten Ausbreitungsmodus entkoppelt wird und derart konfiguriert wird, dass, wenn ein kohärentes elektromagnetisches Feld in den dritten oder den vierten Ausbreitungsmodus wahlweise eingespeist wird, das elektromagnetische Feld dann mit dem vierten beziehungsweise dem dritten Ausbreitungsmodus gekoppelt wird; und
wobei der erste, der zweite, der dritte und der vierte Ausbreitungsmodus den Zuständen 00>, |01>, |10> beziehungsweise |11> zugehörig sind.

**4.** SWAP-Logikgatter, umfassend eine elektromagnetische Struktur (50) nach Anspruch 1 oder 2, wobei die elektromagnetische Struktur einen jeweiligen ersten Ausbreitungsmodus (60) und einen jeweiligen vierten Ausbreitungsmodus (62) zulässt, die voneinander entkoppelt sind;
die elektromagnetische Struktur mit einem jeweiligen Interferometer (51), das von dem ersten und dem vierten Ausbreitungsmodus entkoppelt ist, einen zweiten und einen dritten Ausbreitungsmodus (58, 59) des SWAP-Gatters zulässt und derart konfiguriert ist, dass, wenn ein kohärentes elektromagnetisches Feld in den zweiten oder in den dritten Ausbreitungsmodus des SWAP-Gatters wahlweise eingespeist wird, das elektromagnetische Feld dann mit dem dritten beziehungsweise dem zweiten Ausbreitungsmodus des SWAP-Gatters gekoppelt wird.

**5.** Generator für verschränkte Zustände, umfassend:

- ein CNOT-Gatter (30) nach Anspruch 3;
- ein erstes und ein zweites SWAP-Gatter (50a, 50b); und
- ein zusätzliches Gatter (200);

wobei jedes der ersten und der zweiten SWAP-Gatter einen jeweiligen ersten Ausbreitungsmodus (60a; 60b) und einen jeweiligen vierten Ausbreitungsmodus (62a; 62b) zulässt, die voneinander entkoppelt sind und ein jeweiliges Interferometer (51a; 51b) beinhalten, das von dem ersten und dem vierten Ausbreitungsmodus entkoppelt ist, einen zweiten und einen dritten Ausbreitungsmodus (58a, 59a; 58b, 59b) des SWAP-Gatters zulässt und derart konfiguriert ist, dass, wenn ein kohärentes elektromagnetisches Feld in dem zweiten oder in dem dritten Ausbreitungsmodus des SWAP-Gatters wahlweise eingespeist wird, das elektromagnetische Feld dann mit dem dritten beziehungsweise dem zweiten Ausbreitungsmodus des SWAP-Gatters gekoppelt wird; und
wobei das zusätzliche Gatter umfasst:

- ein jeweiliges erstes Interferometer (202), das einen ersten und einen zweiten Ausbreitungsmodus (218, 219) des zusätzlichen Gatters zulässt und derart konfiguriert ist, dass:

- wenn ein kohärentes elektromagnetisches Feld in den ersten Ausbreitungsmodus des zusätzlichen Gatter eingespeist wird, das elektromagnetische Feld mit dem ersten oder mit dem zweiten Ausbreitungsmodus des zusätzlichen Gatters mit gleichen Wahrscheinlichkeiten wahlweise gekoppelt wird, und
- wenn ein kohärentes elektromagnetisches Feld in den zweiten Ausbreitungsmodus des zusätzlichen Gatters eingespeist wird, das elektromagnetische Feld mit dem ersten oder mit dem zweiten Ausbreitungsmodus des zusätzlichen Gatters mit gleichen Wahrscheinlichkeiten wahlweise gekoppelt wird und darüber hinaus in dem Fall eines Koppelns mit dem zweiten Ausbreitungsmodus eine Phasenverschiebung von $\pi$ Radiant erfährt; und

- ein jeweiliges zweites Interferometer (204), das einen dritten und einen vierten Ausbreitungsmodus (318, 319) des zusätzlichen Gatters zulässt und derart konfiguriert ist, dass:

- wenn ein kohärentes elektromagnetisches Feld in den dritten Ausbreitungsmodus des zusätzlichen Gatters eingespeist wird, das elektromagnetische Feld mit dem dritten oder mit dem vierten Ausbreitungsmodus des zusätzlichen Gatters mit gleichen Wahrscheinlichkeiten wahlweise gekoppelt wird;
- wenn ein kohärentes elektromagnetisches Feld in den vierten Ausbreitungsmodus des zusätzlichen Gatters eingespeist wird, das elektromagnetische Feld dann mit dem dritten oder mit dem vierten Ausbreitungsmodus des zusätzlichen Gatters mit gleichen Wahrscheinlichkeiten wahlweise gekoppelt wird und darüber hinaus in dem Fall des Koppelns mit dem vierten Ausbreitungsmodus eine Phasenverschiebung von $\pi$ Radiant erfährt; und wobei der erste, der zweite, der dritte und der vierte Ausbreitungsmodus des zusätzlichen Gatters und jedes des ersten und des zweiten SWAP-Gatters den Zuständen 00>, |01>, | 10> beziehungsweise |11> zugehörig sind.

**6.** Generator für verschränkte Zustände, umfassend:

- ein erstes und ein zweites CNOT-Gatter (30a, 30b) nach Anspruch 3;
- ein SWAP-Gatter (50); und
- ein zusätzliches Gatter (200); wobei das SWAP-Gatter beinhaltet:

- einen jeweiligen ersten Ausbreitungsmodus (60) und einen jeweiligen vierten Ausbreitungsmodus (62), die voneinander entkoppelt sind; und

- ein jeweiliges Interferometer (51), das von dem ersten und dem vierten Ausbreitungsmodus des SWAP-Gatters entkoppelt ist, einen zweiten und einen dritten Ausbreitungsmodus (58, 59) des SWAP-Gatters zulässt und derart konfiguriert ist, dass, wenn ein kohärentes elektromagnetisches Feld in den zweiten oder den dritten Ausbreitungsmodus des SWAP-Gatters wahlweise eingespeist wird, das elektromagnetische Feld dann mit dem dritten beziehungsweise dem zweiten Ausbreitungsmodus des SWAP-Gatters gekoppelt wird; und wobei das zusätzliche Gatter umfasst:

- ein jeweiliges erstes Interferometer (202), das einen ersten und einen zweiten Ausbreitungsmodus (218, 219) des zusätzlichen Gatters zulässt und derart konfiguriert ist, dass:

- wenn ein kohärentes elektromagnetisches Feld in den ersten Ausbreitungsmodus des zusätzlichen Gatter eingespeist wird, das elektromagnetische Feld mit dem ersten oder mit dem zweiten Ausbreitungsmodus des zusätzlichen Gatters mit gleichen Wahrscheinlichkeiten wahlweise gekoppelt wird, und
- wenn ein kohärentes elektromagnetisches Feld in den zweiten Ausbreitungsmodus des zusätzlichen Gatters eingespeist wird, das elektromagnetische Feld mit dem ersten oder mit dem zweiten Ausbreitungsmodus des zusätzlichen Gatters mit gleichen Wahrscheinlichkeiten wahlweise gekoppelt wird und darüber hinaus in dem Fall des Koppelns mit dem zweiten Ausbreitungsmodus eine Phasenverschiebung von $\pi$ Radiant erfährt; und

- ein jeweiliges zweites Interferometer (204), das einen dritten und einen vierten Ausbreitungsmodus (318, 319) des zusätzlichen Gatters zulässt und derart konfiguriert ist, dass:

- wenn ein kohärentes elektromagnetisches Feld in den dritten Ausbreitungsmodus des zusätzlichen Gatters eingespeist wird, das elektromagnetische Feld mit dem dritten oder mit dem vierten Ausbreitungsmodus des zusätzlichen Gatters mit gleichen Wahrscheinlichkeiten wahlweise gekoppelt wird;
- wenn ein kohärentes elektromagnetisches Feld in den vierten Ausbreitungsmodus des zusätzlichen Gatters eingespeist wird, das elektromagnetische Feld dann mit dem dritten oder mit dem vierten Ausbreitungsmodus des zusätzlichen Gatters mit gleichen Wahrscheinlichkeiten wahlweise gekoppelt wird und darüber hinaus in dem Fall des Koppelns mit dem vierten Ausbreitungsmodus eine Phasenverschiebung von $\pi$ Radiant erfährt; und wobei der erste, der zweite, der dritte und der vierte Ausbreitungsmodus des zusätzlichen Gatters und des SWAP-Gatters den Zuständen 00>, |01>, |10> beziehungsweise |11> zugehörig sind.

7. Quanten-Teleportationssystem, umfassend eine elektromagnetische Struktur nach Anspruch 1 oder 2, wobei N>2 ist, wobei die elektromagnetische Struktur (2000) acht Ausbreitungsmodi zulässt, die entsprechenden Zuständen zugehörig sind, die für drei Qubits codiert werden können, wobei die ersten vier Ausbreitungsmodi Zuständen zugehörig sind, in denen das erste Qubit |0> ist und die zweiten vier Ausbreitungsmodi Zuständen zugehörig sind, in denen das zweite Qubit |1> ist, wobei die elektromagnetische Struktur einen ersten Abschnitt (100a, 100b) beinhaltet, der mit einer elektromagnetische Quelle (2002) gekoppelt werden kann, um ein kohärentes elektromagnetisches Feld in einem der ersten vier Ausbreitungsmodi mit einer ersten Wahrscheinlichkeit a$^2$, oder in einem der zweiten vier Ausbreitungsmodi mit einer zweiten Wahrscheinlichkeit b$^2$ einzuspeisen, wobei der erste Strukturabschnitt konfiguriert ist, um einen BELL-Zustand (a |0>+b|1>) zu erzeugen, wobei BELL einen der vier Bell-Zustände angibt;
wobei die elektromagnetische Struktur ferner einen zweiten Abschnitt (2010, 2020) beinhaltet, der mit dem ersten Abschnitt gekoppelt ist und konfiguriert ist, um eine Bell-Messung an zwei Qubits durchzuführen, sodass bei der Ausgabe von dem zweiten Abschnitt der Zustand a|0>+b|1> auf einem ersten Paar des Ausbreitungsmodus vorliegt, der Zustand b|0>+a|1> auf einem zweiten Paar des Ausbreitungsmodus vorliegt, der Zustand a|0>-b|1> auf einem dritten Paar des Ausbreitungsmodus vorliegt und der Zustand b|0>-a|1> auf einem vierten Paar des Ausbreitungsmodus vorliegt.

8. Verfahren zum Verarbeiten von Quanteninformationen, umfassend die Schritte:

- Bereitstellen einer elektromagnetischen Struktur (30; 50; 100; 400; 2000) nach einem der Ansprüche 1-2; und
- Einspeisen eines kohärenten elektromagnetischen Feldes in wenigstens einen der Ausbreitungsmodi der elektromagnetischen Struktur.

9. Verfahren nach Anspruch 8, umfassend ein Erzeugen von verschränkten Zuständen mittels der elektromagnetischen Struktur (100; 400).

10. Verfahren nach Anspruch 9, wobei der Schritt des Erzeugens verschränkter Zustände das Erzeugen verschränkter Zustände mittels eines Generators (100) beinhaltet, der durch die elektromagnetische Struktur ausgebildet wird und beinhaltet:

- ein CNOT-Gatter (30);
- ein erstes und ein zweites SWAP-Gatter (50a, 50b); und
- ein zusätzliches Gatter (200);

wobei das CNOT-Gatter einen jeweiligen ersten Ausbreitungsmodus (40) und einen jeweiligen zweiten Ausbreitungsmodus (42) zulässt, die voneinander entkoppelt sind, wobei das CNOT-Gatter ferner ein jeweiliges Interferometer (31) umfasst, das von dem ersten und dem zweiten Ausbreitungsmodus des CNOT-Gatters entkoppelt ist, einen dritten und einen vierten Ausbreitungsmodus (38, 39) des CNOT-Gatters zulässt und derart konfiguriert ist, dass, wenn ein kohärentes elektromagnetisches Feld in dem dritten oder in dem vierten Ausbreitungsmodus wahlweise eingespeist wird, das elektromagnetische Feld dann mit dem vierten beziehungsweise dem dritten Ausbreitungsmodus gekoppelt wird; und
wobei jedes des ersten und zweiten SWAP-Gatters einen jeweiligen ersten Ausbreitungsmodus (60a; 60b) und einen jeweiligen vierten Ausbreitungsmodus (62a; 62b) zulässt, die voneinander entkoppelt sind und ein jeweiliges Interferometer (51a; 51b) beinhalten, das von dem ersten und dem vierten Ausbreitungsmodus des SWAP-Gatters entkoppelt ist, einen zweiten und einen dritten Ausbreitungsmodus (58a, 59a; 58b, 59b) des SWAP-Gatters zulässt und derart konfiguriert ist, dass, wenn ein kohärentes elektromagnetisches Feld in den zweiten oder den dritten Ausbreitungsmodus des SWAP-Gatters wahlweise eingespeist wird, das elektromagnetische Feld dann mit dem dritten beziehungsweise dem zweiten Ausbreitungsmodus des SWAP-Gatters gekoppelt wird; und
wobei das zusätzliche Gatter umfasst:

- ein jeweiliges erstes Interferometer (202), das einen ersten und einen zweiten Ausbreitungsmodus (218, 219) des zusätzlichen Gatters zulässt und derart konfiguriert ist, dass:

- wenn ein kohärentes elektromagnetisches Feld in den ersten Ausbreitungsmodus des zusätzlichen Gatters eingespeist wird, das elektromagnetische Feld dann mit dem ersten oder mit dem zweiten Ausbreitungsmodus des zusätzlichen Gatters mit gleichen Wahrscheinlichkeiten wahlweise gekoppelt wird;
- wenn ein kohärentes elektromagnetisches Feld in den zweiten Ausbreitungsmodus des zusätzlichen Gatters eingespeist wird, das elektromagnetische Feld mit dem ersten oder mit dem zweiten Ausbreitungsmodus des zusätzlichen Gatters mit gleichen Wahrscheinlichkeiten wahlweise gekoppelt wird und darüber hinaus in dem Fall des Koppelns mit dem zweiten Ausbreitungsmodus eine Phasenverschiebung von $\pi$ Radiant erfährt; und

- ein jeweiliges zweites Interferometer (204), das einen dritten und einen vierten Ausbreitungsmodus (318, 319) des zusätzlichen Gatters zulässt und derart konfiguriert ist, dass:

- wenn ein kohärentes elektromagnetisches Feld in den dritten Ausbreitungsmodus des zusätzlichen Gatters eingespeist wird, das elektromagnetische Feld mit dem dritten oder mit dem vierten Ausbreitungsmodus des zusätzlichen Gatters mit gleichen Wahrscheinlichkeiten wahlweise gekoppelt wird; und
- wenn ein kohärentes elektromagnetisches Feld in den vierten Ausbreitungsmodus des zusätzlichen Gatters eingespeist wird, das elektromagnetische Feld dann mit dem dritten oder mit dem vierten Ausbreitungsmodus des zusätzlichen Gatters mit gleichen Wahrscheinlichkeiten wahlweise gekoppelt wird und darüber hinaus in dem Fall des Koppelns mit dem vierten Ausbreitungsmodus eine Phasenverschiebung von $\pi$ Radiant erfährt; und wobei der erste, der zweite, der dritte und der vierte Ausbreitungsmodus des zusätzlichen Gatters und jedes des ersten und des zweiten SWAP-Gatters den Zuständen 00>, |01>, | 10> beziehungsweise |11> zugehörig sind.

11. Verfahren nach Anspruch 9, wobei der Schritt des Erzeugens verschränkter Zustände das Erzeugen verschränkter Zustände mittels eines Generators (400) beinhaltet, der durch die elektromagnetische Struktur ausgebildet wird und beinhaltet:

- ein erstes und ein zweites CNOT-Gatter (30a, 30b);

- ein SWAP-Gatter (50); und
- ein zusätzliches Gatter (200);

wobei jedes des ersten und des zweiten CNOT-Gatters einen jeweiligen ersten Ausbreitungsmodus (40) und einen jeweiligen zweiten Ausbreitungsmodus (42) umfasst, die voneinander entkoppelt sind, wobei das CNOT-Gatter ferner ein jeweiliges Interferometer (31) umfasst, das einen dritten und einen vierten Ausbreitungsmodus (38, 39) des CNOT-Gatters ausbildet, das von dem ersten und dem zweiten Ausbreitungsmodus des CNOT-Gatters entkoppelt ist und derart konfiguriert ist, dass, wenn ein kohärentes elektromagnetisches Feld in den dritten oder den vierten Ausbreitungsmodus wahlweise eingespeist wird, das elektromagnetische Feld dann mit dem vierten beziehungsweise dem dritten Ausbreitungsmodus gekoppelt wird;
wobei das SWAP-Gatter beinhaltet:

- einen jeweiligen ersten Ausbreitungsmodus (60) und einen jeweiligen vierten Ausbreitungsmodus (62), die voneinander entkoppelt sind; und
- ein jeweiliges Interferometer (51), das einen zweiten und einen dritten Ausbreitungsmodus (58, 59) des SWAP-Gatters zulässt, das von dem ersten und dem vierten Ausbreitungsmodus des SWAP-Gatters entkoppelt ist und derart konfiguriert ist, dass, wenn ein kohärentes elektromagnetisches Feld in den zweiten oder den dritten Ausbreitungsmodus des SWAP-Gatters wahlweise eingespeist wird, das elektromagnetische Feld dann mit dem dritten beziehungsweise dem zweiten Ausbreitungsmodus des SWAP-Gatters gekoppelt wird; wobei das zusätzliche Gatter umfasst:

- ein jeweiliges erstes Interferometer (202), das einen ersten und einen zweiten Ausbreitungsmodus (218, 219) des zusätzlichen Gatters zulässt und derart konfiguriert ist, dass:

- wenn ein kohärentes elektromagnetisches Feld in den ersten Ausbreitungsmodus des zusätzlichen Gatters eingespeist wird, das elektromagnetische Feld dann mit dem ersten oder mit dem zweiten Ausbreitungsmodus des zusätzlichen Gatters mit gleichen Wahrscheinlichkeiten wahlweise gekoppelt wird;
- wenn ein kohärentes elektromagnetisches Feld in den zweiten Ausbreitungsmodus des zusätzlichen Gatters eingespeist wird, das elektromagnetische Feld mit dem ersten oder mit dem zweiten Ausbreitungsmodus des zusätzlichen Gatters mit gleichen Wahrscheinlichkeiten wahlweise gekoppelt wird und darüber hinaus in dem Fall des Koppelns mit dem zweiten Ausbreitungsmodus eine Phasenverschiebung von $\pi$ Radiant erfährt; und

- ein jeweiliges zweites Interferometer (204), das einen dritten und einen vierten Ausbreitungsmodus (318, 319) des zusätzlichen Gatters zulässt und derart konfiguriert ist, dass:

- wenn ein kohärentes elektromagnetisches Feld in den dritten Ausbreitungsmodus des zusätzlichen Gatters eingespeist wird, das elektromagnetische Feld mit dem dritten oder mit dem vierten Ausbreitungsmodus des zusätzlichen Gatters mit gleichen Wahrscheinlichkeiten wahlweise gekoppelt wird; und
- wenn ein kohärentes elektromagnetisches Feld in den vierten Ausbreitungsmodus des zusätzlichen Gatters eingespeist wird, das elektromagnetische Feld dann mit dem dritten oder mit dem vierten Ausbreitungsmodus des zusätzlichen Gatters mit gleichen Wahrscheinlichkeiten wahlweise gekoppelt wird, und darüber hinaus in dem Fall des Koppelns mit dem vierten Ausbreitungsmodus eine Phasenverschiebung von $\pi$ Radiant erfährt; und wobei der erste, der zweite, der dritte und der vierte Ausbreitungsmodus jedes Gatters des ersten und des zweiten CNOT-Gatters, des SWAP-Gatters und des zusätzlichen Gatters den Zuständen 00>, |01>, |10> beziehungsweise |11> zugehörig sind.

## Revendications

1. Structure électromagnétique configurée pour le traitement d'informations quantiques et pour l'admission de $2^N$ modes de propagation électromagnétique (18, 19 ; 38, 39, 40, 42 ; 58, 59, 60, 62; C1, C2, C3, C4), au moins une paire desdits modes de propagation étant couplés l'un à l'autre ; et dans laquelle chacun desdits modes de propagation est associé à un état quantique à N qubits correspondant indicatif de l'occupation du mode de propagation par un état cohérent qui se propage dans ladite structure électromagnétique, et dans laquelle N>1; ladite structure électromagnétique pouvant être reliée à une source électromagnétique configurée pour exciter, à l'entrée dans la structure électromagnétique, un état quantique d'entrée, sur la base duquel la structure électromagnétique génère un état quantique de sortie, ledit état quantique d'entrée étant formé par la superposition quantique d'un photon unique ou par un état cohérent avec un nombre moyen arbitraire $\mu$ de photons.

2. Structure électromagnétique selon la revendication 1, ladite structure électromagnétique (30 ; 50 ; 100 ; 400 ; 2000) étant du type optique et formant $2^N$ voies optiques, chacune d'elles définissant un mode de propagation correspondant desdits $2^N$ modes de propagation.

3. Porte logique CNOT comprenant une structure électromagnétique (30) selon la revendication 1 ou 2, ladite structure électromagnétique admettant des premier et deuxième modes de propagation (40, 42) découplés l'un de l'autre et incluant un interféromètre (31) qui admet des troisième et quatrième modes de propagation (38, 39), ledit interféromètre étant découplé des premier et deuxième modes de propagation et étant configuré de telle manière que, si un champ électromagnétique cohérent est injecté en alternance dans le troisième ou quatrième mode de propagation, le champ électromagnétique soit alors couplé respectivement au quatrième ou troisième mode de propagation ; et dans laquelle les premier, deuxième, troisième et quatrième modes de propagation sont associés respectivement à des états |00>, |01>, |10> et |11>.

4. Porte logique SWAP comprenant une structure électromagnétique (50) selon la revendication 1 ou 2, ladite structure électromagnétique admettant un premier mode de propagation (60) respectif et un quatrième mode de propagation (62) respectif, découplés l'un de l'autre ; ladite structure électromagnétique incluant un interféromètre (51) respectif, qui est découplé des premier et quatrième modes de propagation, qui admet des deuxième et troisième modes de propagation (58, 59) de la porte SWAP, et qui est configuré de telle manière que, si un champ électromagnétique cohérent est injecté en alternance dans le deuxième ou troisième mode de propagation de la porte SWAP, le champ électromagnétique soit alors couplé respectivement au troisième ou deuxième mode de propagation, de la porte SWAP.

5. Générateur d'état intriqué comprenant :

   - une porte CNOT (30) selon la revendication 3 ;
   - des première et deuxième portes SWAP (50a, 50b) ; et
   - une porte supplémentaire (200) ;

   dans lequel chacune desdites première et deuxième portes SWAP admet un premier mode de propagation (60a ; 60b) respectif et un quatrième mode de propagation (62a ; 62b) respectif, découplés l'un de l'autre, et inclut un interféromètre (51a ; 51b) respectif, qui est découplé des premier et quatrième modes de propagation, qui admet des deuxième et troisième modes de propagation (58a, 59a ; 58b, 59b) de la porte SWAP et qui est configuré de telle manière que, si un champ électromagnétique cohérent est injecté en alternance dans le deuxième ou troisième mode de propagation de la porte SWAP, le champ électromagnétique soit alors couplé respectivement au troisième ou deuxième mode de propagation de la porte SWAP ; et dans lequel ladite porte supplémentaire comprend :

   - un premier interféromètre (202) respectif, qui admet des premier et deuxième modes de propagation (218, 219) de la porte supplémentaire et qui est configuré de telle manière que :

      - si un champ électromagnétique cohérent est injecté dans le premier mode de propagation de la porte supplémentaire, le champ électromagnétique soit alors couplé, en alternance, au premier ou deuxième mode de propagation de la porte supplémentaire, avec des probabilités égales; et
      - si un champ électromagnétique cohérent est injecté dans le deuxième mode de propagation de la porte supplémentaire, le champ électromagnétique soit alors couplé, en alternance, au premier ou deuxième mode de propagation de la porte supplémentaire, avec des probabilités égales et en outre, dans le cas du couplage au deuxième mode de propagation, il subit un déphasage de $\pi$ radians ; et

   - un deuxième interféromètre (204) respectif, qui admet des troisième et quatrième modes de propagation (318, 319) de la porte supplémentaire et qui est configuré de telle manière que :

      - si un champ électromagnétique cohérent est injecté dans le troisième mode de propagation de la porte supplémentaire, le champ électromagnétique soit alors couplé, en alternance, au troisième ou quatrième mode de propagation de la porte supplémentaire, avec des probabilités égales ;
      - si un champ électromagnétique cohérent est injecté dans le quatrième mode de propagation de la porte supplémentaire, le champ électromagnétique soit alors couplé, en alternance, au troisième ou quatrième mode de propagation de la porte supplémentaire, avec des probabilités égales et en outre, dans le cas du couplage au quatrième mode de propagation, il subit un déphasage de $\pi$ radians ;

et dans lequel les premier, deuxième, troisième et quatrième modes de propagation de la porte supplémentaire et de chacune desdites première et deuxième portes SWAP sont associés respectivement à des états |00>, |01>, |10> et |11>.

6. Générateur d'état intriqué comprenant :

- des première et deuxième portes CNOT (30a, 30b) selon la revendication 3;
- une porte SWAP (50) ; et
- une porte supplémentaire (200) ;

dans lequel ladite porte SWAP inclut :

- un premier mode de propagation (60) respectif et un quatrième mode de propagation (62) respectif, découplés l'un de l'autre ; et
- un interféromètre (51) respectif, qui est découplé des premier et quatrième modes de propagation de la porte SWAP, qui admet des deuxième et troisième modes de propagation (58, 59) de la porte SWAP et qui est configuré de telle manière que, si un champ électromagnétique cohérent est injecté en alternance dans le deuxième ou troisième mode de propagation de la porte SWAP, le champ électromagnétique soit alors couplé respectivement au troisième ou deuxième mode de propagation de la porte SWAP ;

et dans lequel ladite porte supplémentaire comprend :

- un premier interféromètre (202) respectif, qui admet des premier et deuxième modes de propagation (218, 219) de la porte supplémentaire et qui est configuré de telle manière que :

 - si un champ électromagnétique cohérent est injecté dans le premier mode de propagation de la porte supplémentaire, le champ électromagnétique soit alors couplé, en alternance, au premier ou deuxième mode de propagation de la porte supplémentaire, avec des probabilités égales; et
 - si un champ électromagnétique cohérent est injecté dans le deuxième mode de propagation de la porte supplémentaire, le champ électromagnétique soit alors couplé, en alternance, au premier ou deuxième mode de propagation de la porte supplémentaire, avec des probabilités égales et en outre, dans le cas du couplage au deuxième mode de propagation, il subit un déphasage de $\pi$ radians ; et

- un deuxième interféromètre (204) respectif, qui admet des troisième et quatrième modes de propagation (318, 319) de la porte supplémentaire et qui est configuré de telle manière que :

 - si un champ électromagnétique cohérent est injecté dans le troisième mode de propagation de la porte supplémentaire, le champ électromagnétique soit alors couplé, en alternance, au troisième ou quatrième mode de propagation de la porte supplémentaire, avec des probabilités égales ;
 - si un champ électromagnétique cohérent est injecté dans le quatrième mode de propagation de la porte supplémentaire, le champ électromagnétique soit alors couplé, en alternance, au troisième ou quatrième mode de propagation de la porte supplémentaire, avec des probabilités égales et en outre, dans le cas du couplage au quatrième mode de propagation, il subit un déphasage de $\pi$ radians ;

et dans lequel les premier, deuxième, troisième et quatrième modes de propagation de la porte supplémentaire et de la porte SWAP sont associés respectivement à des états |00>, |01>, |10> et |11>.

7. Système de téléportation quantique comprenant une structure électromagnétique selon la revendication 1 ou 2, dans lequel N>2, ladite structure électromagnétique (2000) admettant huit modes de propagation associés à des états correspondants qui peuvent être codés avec trois qubits, les quatre premiers modes de propagation étant associés à des états dans lesquels le premier qubit est |0> et les quatre deuxièmes modes de propagation étant associés à des états dans lesquels le deuxième qubit est |1>, ladite structure électromagnétique incluant une première portion (100a, 100b) qui peut être couplée à une source électromagnétique (2002) de manière à injecter un champ électromagnétique cohérent dans l'un desdits quatre premiers modes de propagation, avec une première probabilité $a^2$, ou dans l'un desdits quatre deuxièmes modes de propagation, avec une deuxième probabilité $b^2$,

ladite première portion de structure étant configurée pour générer un état (a|0>+b|1>) BELL, dans lequel BELL indique l'un des quatre états Bell ; ladite structure électromagnétique incluant en outre une deuxième portion (2010, 2020), qui est couplée à la première portion et qui est configurée pour réaliser une mesure Bell sur deux qubits de sorte que, à la sortie de ladite deuxième portion, il y ait un état a|0>+b|1> sur une première paire desdits modes de propagation, il y ait un état b|0>+a|1> sur une deuxième paire desdits modes de propagation, il y ait un état a|0>-b|1> sur une troisième paire desdits modes de propagation et il y ait un état b|0>-a|1> sur une quatrième paire desdits modes de propagation.

8. Méthode de traitement d'informations quantiques comprenant les étapes de :

- fourniture d'une structure électromagnétique (30 ; 50 ; 100 ; 400 ; 2000) selon l'une quelconque des revendications 1 et 2 ; et
- injection d'un champ électromagnétique cohérent dans au moins l'un des modes de propagation de la structure électromagnétique.

9. Méthode selon la revendication 8, comprenant la génération d'états intriqués au moyen de ladite structure électromagnétique (100 ; 400).

10. Méthode selon la revendication 9, dans laquelle ladite étape de la génération d'états intriqués inclut la génération d'états intriqués au moyen d'un générateur (100) formé par ladite structure électromagnétique et incluant :

- une porte CNOT (30) ;
- des première et deuxième portes SWAP (50a, 50b) ; et
- une porte supplémentaire (200) ;

dans laquelle la porte CNOT admet un premier mode de propagation (40) respectif et un deuxième mode de propagation (42) respectif, découplés l'un de l'autre, la porte CNOT comprenant en outre un interféromètre (31) respectif, qui est découplé des premier et deuxième modes de propagation de la porte CNOT, qui admet des troisième et quatrième modes de propagation (38, 39) de la porte CNOT et qui est configuré de telle manière que, si un champ électromagnétique cohérent est injecté en alternance dans le troisième ou quatrième mode de propagation, le champ électromagnétique soit alors couplé respectivement au quatrième ou troisième mode de propagation ;
et dans laquelle chacune desdites première et deuxième portes SWAP admet un premier mode de propagation (60a ; 60b) respectif et un quatrième mode de propagation (62a ; 62b) respectif, découplés l'un de l'autre, et inclut un interféromètre (51a ; 51b) respectif, qui est découplé des premier et quatrième modes de propagation de la porte SWAP, qui admet des deuxième et troisième modes de propagation (58a, 59a ; 58b, 59b) de la porte SWAP et qui est configuré de telle manière que, si un champ électromagnétique cohérent est injecté en alternance dans le deuxième ou troisième mode de propagation de la porte SWAP, le champ électromagnétique soit alors couplé respectivement au troisième ou deuxième mode de propagation de la porte SWAP ;
et dans laquelle ladite porte supplémentaire comprend :

- un premier interféromètre (202) respectif, qui admet des premier et deuxième modes de propagation (218, 219) de la porte supplémentaire et qui est configuré de telle manière que :

- si un champ électromagnétique cohérent est injecté dans le premier mode de propagation de la porte supplémentaire, le champ électromagnétique soit alors couplé, en alternance, au premier ou deuxième mode de propagation de la porte supplémentaire, avec des probabilités égales; et
- si un champ électromagnétique cohérent est injecté dans le deuxième mode de propagation de la porte supplémentaire, le champ électromagnétique soit alors couplé, en alternance, au premier ou deuxième mode de propagation de la porte supplémentaire, avec des probabilités égales et en outre, dans le cas du couplage au deuxième mode de propagation, il subit un déphasage de $\pi$ radians ; et

- un deuxième interféromètre (204) respectif, qui admet des troisième et quatrième modes de propagation (318, 319) de la porte supplémentaire et qui est configuré de telle manière que :

- si un champ électromagnétique cohérent est injecté dans le troisième mode de propagation de la porte supplémentaire, le champ électromagnétique soit alors couplé, en alternance, au troisième ou quatrième mode de propagation de la porte supplémentaire, avec des probabilités égales; et

- si un champ électromagnétique cohérent est injecté dans le quatrième mode de propagation de la porte supplémentaire, le champ électromagnétique soit alors couplé, en alternance, au troisième ou quatrième mode de propagation de la porte supplémentaire, avec des probabilités égales et en outre, dans le cas du couplage au quatrième mode de propagation, il subit un déphasage de $\pi$ radians ;

et dans laquelle les premier, deuxième, troisième et quatrième modes de propagation de la porte supplémentaire et de chacune desdites première et deuxième portes SWAP sont associés respectivement à des états |00>, |01>, |10> et |11>.

11. Méthode selon la revendication 9, dans laquelle ladite étape de la génération d'états intriqués inclut la génération d'états intriqués au moyen d'un générateur (400) formé par ladite structure électromagnétique et incluant :

- des première et deuxième portes CNOT (30a, 30b) ;
- une porte SWAP (50) ; et
- une porte supplémentaire (200) ;

dans laquelle chacune des première et deuxième portes CNOT comprend un premier mode de propagation (40) respectif et un deuxième mode de propagation (42) respectif, découplés l'un de l'autre, la porte CNOT comprenant en outre un interféromètre (31) respectif, qui forme des troisième et quatrième modes de propagation (38, 39) de la porte CNOT, qui est découplé des premier et deuxième modes de propagation de la porte CNOT, et qui est configuré de telle manière que, si un champ électromagnétique cohérent est injecté en alternance dans le troisième ou quatrième mode de propagation, le champ électromagnétique soit alors couplé respectivement au quatrième ou troisième mode de propagation ;
dans laquelle ladite porte SWAP inclut :

- un premier mode de propagation (60) respectif et un quatrième mode de propagation (62) respectif, découplés l'un de l'autre ; et
- un interféromètre (51) respectif, qui admet des deuxième et troisième modes de propagation (58, 59) de la porte SWAP, qui est découplé des premier et quatrième modes de propagation de la porte SWAP, et qui est configuré de telle manière que, si un champ électromagnétique cohérent est injecté en alternance dans le deuxième ou troisième mode de propagation de la porte SWAP, le champ électromagnétique soit alors couplé respectivement au troisième ou deuxième mode de propagation de la porte SWAP ;

dans laquelle ladite porte supplémentaire comprend :

- un premier interféromètre (202) respectif, qui admet des premier et deuxième modes de propagation (218, 219) de la porte supplémentaire et qui est configuré de telle manière que :

- si un champ électromagnétique cohérent est injecté dans le premier mode de propagation de la porte supplémentaire, le champ électromagnétique soit alors couplé, en alternance, au premier ou deuxième mode de propagation de la porte supplémentaire, avec des probabilités égales ;
- si un champ électromagnétique cohérent est injecté dans le deuxième mode de propagation de la porte supplémentaire, le champ électromagnétique soit alors couplé, en alternance, au premier ou deuxième mode de propagation de la porte supplémentaire, avec des probabilités égales et en outre, dans le cas du couplage au deuxième mode de propagation, il subit un déphasage de $\pi$ radians ; et

- un deuxième interféromètre (204) respectif, qui admet des troisième et quatrième modes de propagation (318, 319) de la porte supplémentaire et qui est configuré de telle manière que :

- si un champ électromagnétique cohérent est injecté dans le troisième mode de propagation de la porte supplémentaire, le champ électromagnétique soit alors couplé, en alternance, au troisième ou quatrième mode de propagation de la porte supplémentaire, avec des probabilités égales; et
- si un champ électromagnétique cohérent est injecté dans le quatrième mode de propagation de la porte supplémentaire, le champ électromagnétique soit alors couplé, en alternance, au troisième ou quatrième mode de propagation de la porte supplémentaire, avec des probabilités égales et en outre, dans le cas du couplage au quatrième mode de propagation, il subit un déphasage de $\pi$ radians ;

et dans laquelle les premier, deuxième, troisième et quatrième modes de propagation de chaque porte des première et deuxième portes CNOT, de la porte SWAP et de la porte supplémentaire sont associés respectivement à des états |00>, |01>, |10> et |11>.

| $a$ | $b$ | $a'$ | $b'$ |
|---|---|---|---|
| 0 | 0 | 0 | 0 |
| 0 | 1 | 1 | 0 |
| 1 | 0 | 0 | 1 |
| 1 | 1 | 1 | 1 |

FIG. 1A

| $a$ | $b$ | $a'$ | $b'$ |
|---|---|---|---|
| 0 | 0 | 0 | 0 |
| 0 | 1 | 0 | 1 |
| 1 | 0 | 1 | 1 |
| 1 | 1 | 1 | 0 |

FIG. 1B

FIG. 2A

FIG. 2B

$$NOT = \begin{pmatrix} 0 & 1 \\ 1 & 0 \end{pmatrix};$$

FIG. 3A

$$SWAP = \begin{pmatrix} 1 & 0 & 0 & 0 \\ 0 & 0 & 1 & 0 \\ 0 & 1 & 0 & 0 \\ 0 & 0 & 0 & 1 \end{pmatrix};$$

FIG. 3B

$$CNOT = \begin{pmatrix} 1 & 0 & 0 & 0 \\ 0 & 1 & 0 & 0 \\ 0 & 0 & 0 & 1 \\ 0 & 0 & 1 & 0 \end{pmatrix}.$$

FIG. 3C

$$TOFFOLI = \begin{pmatrix} 1 & 0 & 0 & 0 & 0 & 0 & 0 & 0 & 0 \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & 1 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 0 & 1 \\ 0 & 0 & 0 & 0 & 0 & 0 & 0 & 1 & 0 \end{pmatrix}.$$

FIG. 3D

$$FREDKIN = \begin{pmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 0 & 0 & 0 & 1 \\ 0 & 0 & 0 & 0 & 0 & 1 & 0 & 0 \\ 0 & 0 & 0 & 0 & 0 & 0 & 1 & 0 \\ 0 & 0 & 0 & 0 & 1 & 0 & 0 & 0 \end{pmatrix}.$$

FIG. 3E

$$000 = \begin{pmatrix} 1 \\ 0 \\ 0 \\ 0 \\ 0 \\ 0 \\ 0 \\ 0 \end{pmatrix}, 001 = \begin{pmatrix} 0 \\ 1 \\ 0 \\ 0 \\ 0 \\ 0 \\ 0 \\ 0 \end{pmatrix}, 010 = \begin{pmatrix} 0 \\ 0 \\ 1 \\ 0 \\ 0 \\ 0 \\ 0 \\ 0 \end{pmatrix}, \ldots 111 = \begin{pmatrix} 0 \\ 0 \\ 0 \\ 0 \\ 0 \\ 0 \\ 0 \\ 1 \end{pmatrix}$$

FIG. 4A

$$\begin{pmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 1 & 0 & 0 & 0 \\ 0 & 0 & 0 & 0 & 0 & 1 & 0 & 0 \\ 0 & 0 & 0 & 0 & 0 & 0 & 0 & 1 \\ 0 & 0 & 0 & 0 & 0 & 0 & 1 & 0 \end{pmatrix} \begin{pmatrix} 0 \\ 0 \\ 0 \\ 0 \\ 0 \\ 0 \\ 1 \\ 0 \end{pmatrix} = \begin{pmatrix} 0 \\ 0 \\ 0 \\ 0 \\ 0 \\ 0 \\ 0 \\ 1 \end{pmatrix}.$$

FIG. 4B

FIG. 5

FIG. 6

FIG. 7

FIG. 8

$$CNOT_0 = (X \otimes I) \cdot CNOT_1 \cdot (X \otimes I)$$

$$= \begin{pmatrix} 0 & 0 & 1 & 0 \\ 0 & 0 & 0 & 1 \\ 1 & 0 & 0 & 0 \\ 0 & 1 & 0 & 0 \end{pmatrix} \begin{pmatrix} 0 & 1 & 0 & 0 \\ 1 & 0 & 0 & 0 \\ 0 & 0 & 1 & 0 \\ 0 & 0 & 0 & 1 \end{pmatrix} \begin{pmatrix} 0 & 0 & 1 & 0 \\ 0 & 0 & 0 & 1 \\ 1 & 0 & 0 & 0 \\ 0 & 1 & 0 & 0 \end{pmatrix}$$

$$= \begin{pmatrix} 0 & 1 & 0 & 0 \\ 1 & 0 & 0 & 0 \\ 0 & 0 & 1 & 0 \\ 0 & 0 & 0 & 1 \end{pmatrix}$$

## FIG. 9

$$\begin{pmatrix} 1 & 0 & 0 & 0 \\ 0 & 0 & 1 & 0 \\ 0 & 1 & 0 & 0 \\ 0 & 0 & 0 & 1 \end{pmatrix} \begin{pmatrix} 1 & 0 & 0 & 0 \\ 0 & 1 & 0 & 0 \\ 0 & 0 & 0 & 1 \\ 0 & 0 & 1 & 0 \end{pmatrix} \begin{pmatrix} 1 & 0 & 0 & 0 \\ 0 & 0 & 1 & 0 \\ 0 & 1 & 0 & 0 \\ 0 & 0 & 0 & 1 \end{pmatrix} = \begin{pmatrix} 1 & 0 & 0 & 0 \\ 0 & 0 & 0 & 1 \\ 0 & 0 & 1 & 0 \\ 0 & 1 & 0 & 0 \end{pmatrix}$$

## FIG. 11

**FIG. 10**

**FIG. 12**

**FIG. 15**

**FIG. 14**

EP 3 109 803 B1

FIG. 13

FIG. 16

teleportation state

classical information

BOB
1202

1210

entangled pair

1208

ALICE
1200

1206

SOURCE
1204

initial state

FIG. 17

30

CNOT

900

902

SOURCE

904

FIG. 18

FIG. 19

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAMSOLAH SALEMIAN et al.** Quantum state swapping in optical quantum communication using Mach-Zehnder interferometer. *IEEE INTERNATIONAL SYMPOSIUM ON TELECOMMUNICATIONS,* 27 August 2008, 182-187
- Demonstration of an all-optical quantum controlled NOT gate. **O'BRIEN J. L. et al.** CORNELL UNIVERSITY LIBRARY. Olin Library Cornell University, 08 March 2004, vol. 201
- **SHAMSOLAH SALEMIAN et al.** Quantum entanglement implementation using interferometric electro-optic modulator and coupled mode theory. *JOURNAL OF APPLIED SCIENCES,* 31 December 2008
- Teleportation-based realization of an optical quantum two-qubit entangling gate. **WEI-BO GAO et al.** CORNELL UNIVERSITY LIBRARY. Olin Library Cornell University, 03 November 2010, vol. 201